# EUROPÄISCHE PATENTSCHRIFT

(11) **EP 3 180 542 B1**
(45) Veröffentlichungstag und Bekanntmachung des Hinweises auf die Patenterteilung: **17.10.2018**
(21) Anmeldenummer: 15757131.6
(22) Anmeldetag: 07.08.2015
(51) Int. Cl.: F16F 15/03

(54) **MAGNETDÄMPFER FÜR SCHWINGUNGSTILGER**
MAGNETIC DAMPER FOR VIBRATION ABSORBER
AMORTISSEUR MAGNETIQUE POUR ABSORBEUR DE VIBRATIONS

(30) Priorität: 13.08.2014 EP 14002824; 16.12.2014 EP 14004235
(43) Veröffentlichungstag der Anmeldung: 21.06.2017
(73) Patentinhaber: ESM Energie- und Schwingungstechnik Mitsch GmbH, 64646 Heppenheim (DE)
(72) Erfinder: GLANZNER, Sebastian, 64653 Lorsch (DE)
(74) Vertreter: Benz, Jürgen
(86) Internationale Anmeldenummer: PCT/EP2015/001637
(87) Internationale Veröffentlichungsnummer: WO 2016/023628

(56) Entgegenhaltungen:
- WO-A1-2012/015488
- FR-A1- 2 995 561

## Beschreibung

### Gegenstand und technisches Gebiet der Erfindung

Die Erfindung betrifft rotationssymmetrische Dämpfer zur Beseitigung und Vermeidung von Schwingungen in Maschinen und Anlagen, insbesondere Windkraftanlagen, wobei die Dämpfung durch magnetisch erzeugte Wirbelströme erfolgt. Die Erfindung betrifft insbesondere zu einer Längsachse rotationssymmetrisch angeordnete Wirbelstromdämpfer, welche aus in ihrer Gesamtheit ringförmig um besagte Längsachse angeordneten einzelnen oder mehreren geschichteten Ringmagneten oder magnetischen ringförmigen Anordnungen von entsprechend ausgerichteten Permanentmagneten und / oder Elektromagneten bestehen.

Die Erfindung betrifft weiterhin Schwingungstilger, insbesondere Pendeltilger, welche mit derartigen Magnetdämpfern ausgestattet sind, sowie Schwingungskräften ausgesetzten Anlagen, insbesondere Windkraftanlagen, die derartige Schwingungstilger aufweisen. Magnet- bzw. Wirbelstromdämpfer sind als solche dem Stand der Technik bekannt. Die Funktionsweise solcher Dämpfer basiert darauf, dass in einem elektrischen Leiter, der sich durch ein sich änderndes Magnetfelds bewegt, ein Strom induziert wird. Dieser induzierte Strom, auch Wirbelstrom genannt, erzeugt ebenfalls ein Magnetfeld. Das Magnetfeld wirkt gegen das erste Magnetfeld und erzeugt so eine Widerstandskraft. Durch eine axiale Relativbewegung zwischen Leiter und Magnetfeld wird im Leiter ein umlaufender Wirbelstrom induziert. Diese resultierenden Wirbelströme bilden wiederum Magnetfelder die dem ursprünglichen Magnetfeld entgegenwirkt und die Bewegung des Leiters bremst. Erhöht sich die Geschwindigkeit wird der Wirbelstrom im Leiter erhöht, was zu einem stärkeren Magnetfeld führt, wodurch die Bewegung weiter und verstärkt gebremst wird.

WO 99/63219 wird als nächstliegender Stand der Technik angesehen und offenbart die Merkmale des Oberbegriffs von Anspruch 1.

FR 2 995 561 gehört ebenfalls zum Stand der Technik. In der DE 37 41 578 A1 wird eine Vibrationsdämpfungsvorrichtung für Präzisionsmaschinen; beschrieben, welche auf der Bewegung einer Platte zwischen dem Nord- und Südpol eines Magnetfeldes beruht. Die US 2007/0131504 beschreibt einen planen Vibrationsdämpfer, bei dem eine Transversalpendelvorrichtung in dem Feld von plan angeordneten Magnetfeldern bewegt wird. In der EP 2 696 072 wird eine Schwingungstilgeranordnung für Windkraftanlagen mit einem Massenpendel beschrieben. Das Massenpendel wird dabei im Schwingungsfall in vorzugsweise zwei Schwingungsvorrichtungen geführt, wobei es zu einer Bewegung durch ein plan angeordnetes Magnetfeld kommt, welches den dämpfenden Wirbelstrom erzeugt.

Die im Stand der Technik beschriebenen Magnetdämpfer weisen den Nachteil auf, dass sie sehr richtungsabhängig sind und nicht axial verdreht werden können. Überdies können mit ihnen oft nicht ausreichend hohe Dämpfungsdichten von oft über 1000 kNs/m x m³ erreicht werden, welche aber bei Einsatz von Windkraftanlagen, insbesondere von Windkraftanlagen mit Türmen von 100m Höhe und darüber, durchaus benötigt werden.

Es bestand somit die Aufgabe, einen Magnetdämpfer, insbesondere für den Einsatz in Windkraftanlagen, zur Verfügung zu stellen, welche die beschriebenen Nachteile nicht weiter aufweist. Die Aufgabe wurde durch Bereitstellung der unten und in Ansprüchen spezifizierten magnetischen Dämpfers sowie von Schwingungstilgern, die einen solchen Magnetdämpfer aufweisen, gelöst.

### Zusammenfassung der Erfindung:

Es wurde nun gefunden, dass ein Schwingungsdämpfer, der im Wesentlichen aus einem Rohr aus einem leitfähigem aber nicht magnetisierbaren Material besteht, welches durch um das Rohr herum angeordneten Ringen aus magnetisierbaren Materialen, insbesondere Permanentmagneten und / oder Magnetfelder generierenden elektrischen Spulen bewegt wird, ein Wirbelstrom ("Eddy- current") erzeugt wird, welcher wiederum ein Magnetfeld induziert, das dem ursprünglichen Magnetfeld entgegenwirkt, und somit eine Abbremsen der Bewegung des Rohres bzw. eine Dämpfung der Bewegung bewirkt. Ist ein solches Rohr beispielsweise mit einer Schwingungsvorrichtung, insbesondere einem Pendel, verbunden, so kann die Schwingung bzw. Pendelbewegung wirksam gedämpft werden.

Die Wirbelstromdämpfer des Standes der Technik erreichen nur Dämpfungsdichten von max. 1000 kNs/m x m³. Mittels der hier vorgestellten erfindungsgemäßen Dämpfer können Dämpfungsdichten zwischen 500 und 3.000 - 5000 kNs/m x m³, im allgemeinen jedoch von deutlich über 1000 kNs/m x m³, vorzugsweise ≥ 1.500 kNs/m x m³, insbesondere ≥ 2.500 kNs/m x m³ entsprechend der Art und Anzahl der eingesetzten magnetischen Bauteile erzielt werden. Dies ist eine erhebliche Verbesserung gegenüber dem Stand der Technik.

Somit sind solche erfindungsgemäßen Magnetdämpfer vor allem für Pendeltilger in mittleren und großen Windkraftanlagen, aber auch in anderen schwingungsanfälligen hohen Gebäuden und Anlagen, bestens geeignet, um alle Arten von in solchen Anlagen auftretenden Störschwingungen zu reduzieren oder zu vermeiden.

Im Folgenden und in den Ansprüchen werden einige Begriffe verwendet, die hiermit kurz erläutert werden sollen.

Definitionsgemäß umfasst der Begriff "Ring" oder "Magnetring" alle denkbaren ringförmigen oder annähernd ringförmigen Gebilde, also alle Anordnungen, welche in Bezug auf einen gedachten Mittelpunkt einen definierten gleichen oder annähernd gleichen Abstand aufweisen, wobei gleichmäßige Vielecke mit mindestens sechs Ecken mit eingeschlossen sind.

Ferner werden äußere und innere Ringe, Magnetringe, oder Ringanordnungen unterschieden. Äußere Ringe sind erfindungsgemäß solche magnetischen Ringanordnungen, welche in Bezug auf das Leiter- oder Dämpferrohr (3) außen um das Rohr (3) geführt sind, ohne in einem bestimmten Bereich mit der Außenwand in Kontakt zu stehen unter Einhaltung eines bestimmten, annähernd gleichen Abstandes. Innere Ringe sind erfindungsgemäß solche magnetischen Ringanordnungen, welche in Bezug auf das Leiter- oder Dämpferrohr (3) innen um das Rohr (3), also an der Innenwiderstand entlang, geführt sind, ohne in einem bestimmten Bereich mit der Innenwiderstand in Kontakt zu stehen unter Einhaltung eines bestimmten, annähernd gleichen Abstandes.

Des Weiteren werden radial magnetisierte oder magnetisierbare Ringe und axial magnetisierte oder magnetisierbare Ringe unterschieden. Hierbei bezieht sich "radial" und "axial" auf die Längsachse des Dämpferrohr (3) bzw. des gesamten erfindungsgemäßen Magnetdämpfers. "Magnetisierte Ringe" bedeutet dabei, dass die Nord-Süd- Ausrichtung der eingesetzten Magnete entweder axial oder radial zu besagter Längsachse angeordnet sind. Eine Kombination von axial und radial ausgerichteten Magneten mit einer bestimmten Reihenfolge der Magnetisierungsrichtung werden auch als "Halbach-Anordnung" bezeichnet.

Ferner werden zwischen Ringen bzw. Ringanordnungen aus "Permanentmagneten" und "Elektromagneten" unterschieden. Bei Permanentmagneten handelt es sich um von sich aus dauermagnetischen Materialien, welche ganz oder teilweise ringförmig ausgebildet sind, oder rechteckige Flach- oder Würfelmagnete sind, welche kreisförmig nebeneinander angeordnet sind. Bei Elektromagneten handelt es sich definitionsgemäß um Spulen bzw. Spulenkörper in Form von Spulenringen, wobei die Spulen bzw. Spulenringe erst bei Stromdurchfluss ein Magnetfeld aufbauen. Falls nicht anders gesagt, besteht ein Spulenring aus einer ringförmig um den Durchmesser des Rohres (3) verlaufenden Spulenwicklung.

Im Detail werden die folgenden Begriffe verwendet:
- äußere radial magnetisierte Permanentmagnete (1)
- innere radial magnetisierte Permanentmagnete (4)
- äußere radial magnetisierte Elektromagnete in Form von gewickelten Spulen (6)
- innere radial magnetisierte Elektromagnete in Form von gewickelten Spulen (16)
- äußere axial magnetisierte Permanentmagnete (11)
- innere axial magnetisierte Permanentmagnete (12)
- Halbach-Anordnung: eine Anordnung von benachbarten Permanentmagneten des Typs (1)(11) oder (4)(12), bei denen die Magnetisierungsrichtung sich von Magnet zu benachbarten Magnet um jeweils 90° in einer Richtung verändert.

Gegenstand der Erfindung ist somit ein rotationsymmetrischer Magnetdämpfer umfassend
(i) ein Dämpferrohr (3) aus einem nicht magnetisierbaren leitfähigem Material, vorzugsweise Aluminium, Kupfer oder Legierungen aus diesen Metallen,
(ii) eine um die Längsachse des Dämpfers rotationssymmetrische mit Befestigungsmitteln versehene Trägervorrichtung (10), welche mindestens einen, vorzugsweise zwei bis zehn, magnetische äußere Ringe oder entsprechend ringförmige Anordnungen aus einem oder mehreren Permanentmagneten (1) oder als Elektromagnete fungierende Spulen (6) aufweist, die so angeordnet oder magnetisiert sind, dass Nord- und Südpol des oder der Magneten entweder radial nach innen oder radial nach außen in Bezug auf die Längsachse des Rohrs (3) des Magnetdämpfers weisen, wobei die besagten magnetischen äußeren Ringe (1)(6) über das Dämpferrohr (3) geschoben sind, und Ring(e) und Rohr relativ zueinander bewegbar sind, und der Abstand zwischen dem mindestens einen magnetischen Ring (1)(6) und der Außenfläche des Dämpferrohrs (3) ≥ 0.1mm und ≤ 2.0mm, vorzugsweise 0.25 - 1.5mm, insbesondere 0.5 - 1.0mm beträgt, wobei bei Verwendung von zwei oder mehr Ringen (1)(6), bzw. ringförmigen Anordnungen diese so angeordnet, bzw. magnetisiert sind, dass die radial gerichtete Polung eines Magnetringes (1)(6) einer Ebene entgegengesetzt der radial gerichteten Polung des unmittelbar oberhalb und /oder unterhalb angeordneten Magnetringes (1)(6) ist, sich also die radial magnetisierten Ringebenen in ihrer Polung abwechseln, und
(iii) optional bzw. bevorzugt mindestens einen aus einem ferromagnetischen Material bestehenden Ring (2) oder einer entsprechenden ringförmigen Anordnung, beispielsweise aus Stahl, vorzugsweise Stahl mit relativ hohem Eisengehalt, oder aus ihm zusammengesetzten Segmenten, wobei dieser Ring (2) den mindestens einem magnetischen äußeren Ring (1)(6) unmittelbar umschließt und die Anzahl der Ringe (2) der Anzahl der Ringe (1)(6) entspricht.

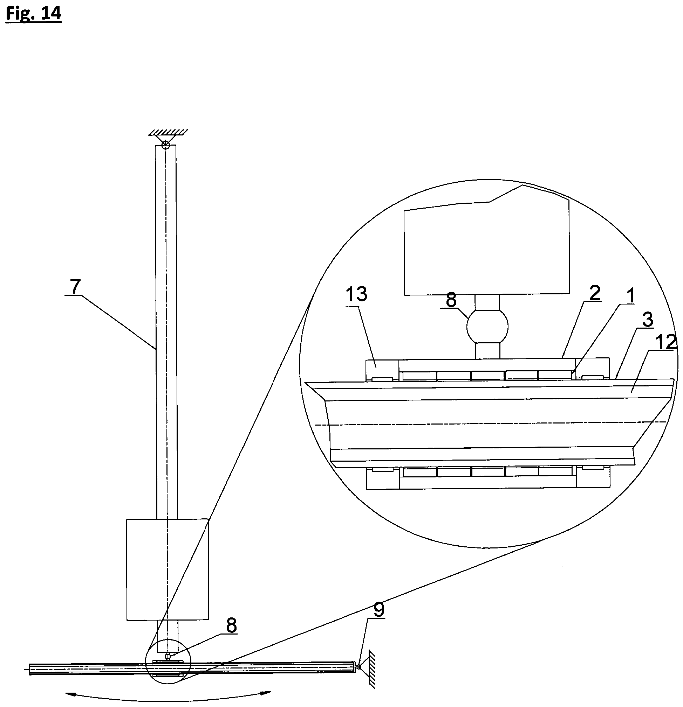

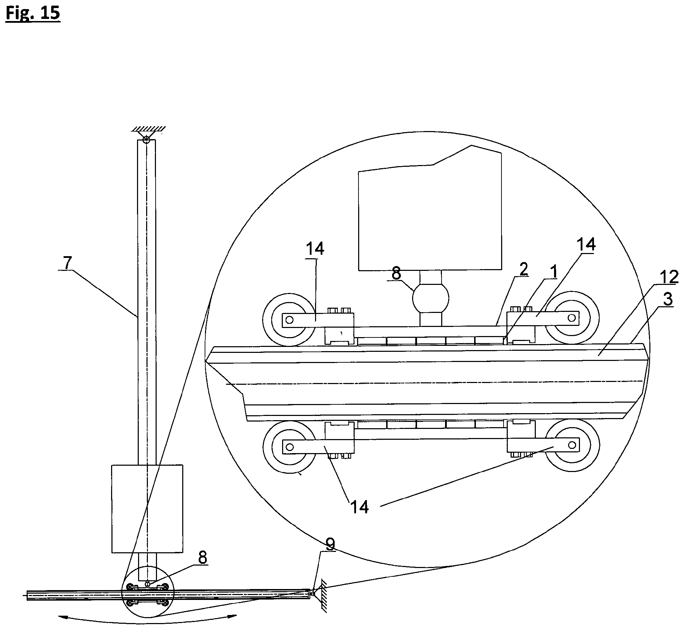

In einer speziellen, besonders vorteilhaften Ausführungsform umfasst der erfindungsgemäße Magnetdämpfer ein Dämpfungsrohr (3) in dessen Inneren sich ein weiteres Rohr oder ein Stab (15) befindet, welcher aus einem ferromagnetischen, also magnetisierbaren Material besteht, welcher die Magnetisierung und damit die Dämpfung um mindestens das Dreifache verstärken kann. Diese Ausführungsform kann insbesondere bei geringem Platzbedarf die unten beschriebene weitere Ausführungsform ersetzen, welche mindestens einen Magnetring (4) im Inneren des nicht-magnetisierbaren aber leitfähigen Dämpfungsrohres (3) aufweist. Das besagte innere Rohr (15) besteht aus einem ferromagnetischen Material, wie z.B. Eisen oder Stahl mit einem hohen Eisenanteil. Das innere Rohr (15) (oder Stab) wird einfach in das elektrisch leitfähige Rohr (3) eingeschoben, und kann ggf. mit diesem fest verbunden werden (z.B. durch Klebung), falls dies erforderlich sein sollte. Ansonsten ist es variabel ein- und ausschiebbar. Es findet keine Relativbewegung zwischen den beiden Rohren (3) und (15) statt. So kann entweder ein Dämpfer mit höherer Leistung oder ein kleinerer Dämpfer mit gleicher Leistung realisiert werden. Gleichzeitig wird die Anzahl der benötigten Magnete minimiert. In Fig. 14 wird eine derartiges Innenrohr gezeigt.

Gegenstand der der Erfindung ist somit ein entsprechender Magnetdämpfer welcher ein Dämpferrohr (3) und zusätzlich ein aus einem ferromagnetischen Material bestehendes Rohr oder ein entsprechender Rundstab (15) aufweist, das bzw. der an der Innenwand des Dämpferrohr (3) anliegt und mit diesem in der Weise verbunden ist, dass es die Relativbewegung des Dämpferrohrs (3) mit ausführt.

Gegenstand der Erfindung ist weiter ein rotationsymmetrischer Magnetdämpfer umfassend
(i) ein Dämpferrohr (3) aus einem nicht magnetisierbaren leitfähigem Material, vorzugsweise Aluminium, Kupfer oder Legierungen aus diesen Metallen,
(ii) eine um die Längsachse des Dämpfers rotationssymmetrische mit Befestigungsmitteln versehene Trägervorrichtung (10), welche mindestens einen, vorzugsweise zwei bis zehn, magnetische innere Ringe oder entsprechende ringförmige Anordnungen aus einem oder mehreren Permanentmagneten (4) oder als Elektromagnete fungierende Spulen (16) aufweist, der oder die so angeordnet oder magnetisiert sind, dass Nord- und Südpol des oder der Magneten entweder radial nach innen oder radial nach außen in Bezug auf die Längsachse oder des Rohrs (3) des Magnetdämpfers bzw. weisen, wobei der oder die magnetischen inneren Ringe (4)(16) in das Dämpferrohr (3) geschoben sind, und Ring(e) und Rohr relativ zueinander bewegbar sind, und der Abstand zwischen dem mindestens einen magnetischen Ring (4)(16) und der Innenfläche des Dämpferrohrs (3) ≥ 0.1mm und ≤ 2.0mm, vorzugsweise 0.25 - 1.25mm, insbesondere 0.5 - 1.0mm beträgt, wobei bei Verwendung von zwei oder mehr Ringen (4)(16), diese so angeordnet, bzw. magnetisiert sind, dass die radial gerichtete Polung eines Magnetringes (4)(16) einer Ebene entgegengesetzt der radial gerichteten Polung des unmittelbar oberhalb und /oder unterhalb angeordneten Magnetringes (4)(16) ist, sich also die radial magnetisierten Ringebenen in ihrer Polung abwechseln, und
(iii) optional oder vorzugsweise mindestens einen aus einem ferromagnetischen Material, beispielsweise Stahl, vorzugsweise Stahl mit relativ hohem Eisengehalt, bestehenden massiven zylindrischen Kern (5) oder aus ihm zusammengesetzten Teilen, welcher von dem mindestens einem magnetischen inneren Ring (4)(16) unmittelbar umschlossen wird, wobei vorzugsweise die Anzahl der Kerne (5) der Anzahl der Ringe (4)(16) entsprechen.

In einer besonderen Ausführungsform der Erfindung wird ein Magnetdämpfer zur Verfügung gestellt, der die Merkmale der beiden oben beschriebenen Magnetdämpfer in sich vereint, also sowohl in Bezug auf das leitfähige nicht-magnetisierbare Rohr (3) äußere wie innere Magnete und / oder als Elektromagnete fungierende Spulen aufweist.

Gegenstand der Erfindung ist somit ein entsprechender Magnetdämpfer, der zusätzlich zu dem besagten mindestens einen magnetischen äußeren Ring (1)(6) (vorzugsweise zwei bis zehn Ringe bzw. ringförmige Anordnungen), im Inneren des Rohres (3) mindestens einen magnetischen inneren Ring, vorzugsweise zwei bis zehn Ringe bzw. ringförmige Anordnungen, aus jeweils einem oder mehreren Permanentmagneten (4) oder als Elektromagnete fungierenden Spulen (16) aufweist, die so angeordnet oder magnetisiert sind, dass Nord- und Südpol des oder der Magneten entweder radial nach innen oder radial nach außen in Bezug auf die Längsachse oder des Rohrs (3) des Magnetdämpfers weisen, wobei Anordnung und Polung des oder der magnetischen inneren Ringe (4)(16) so gewählt ist, dass er oder sie auf der gleichen Ebene gegenüber dem mindestens einen magnetischen äußeren Ring (1)(6) platziert ist/sind und sich die gegenüberliegenden Pole des inneren und äußeren Rings, bzw. der inneren und äußeren Ringe durch die Wand des Rohrs (3) hindurch anziehen, und besagte Ringe (1)(6) und (4)(16) gemeinsam und relativ zum Dämpferrohr (3) bewegbar sind, wobei der Abstand zwischen dem magnetischen Ringen (1)(4) bzw. (6)(16) und der Außenfläche bzw. der Innenfläche des Dämpferrohrs (3) ≥ 0.1mm und ≤ 2.0mm, vorzugsweise 0.25 - 1.25mm, insbesondere 0.5 - 1.0mm beträgt, und wobei bei Verwendung von zwei oder mehr Ringen diese so angeordnet, bzw. magnetisiert sind, dass die radial gerichtete Polung der Magnetringe einer Ebene entgegengesetzt ist der radial gerichteten Polung des unmittelbar oberhalb und /oder unterhalb angeordneten Magnetringe, sich also die radial magnetisierten Ringebenen, bestehend vorzugsweise aus einer gleichen Anzahl sich gegenüberliegender, sich anziehender Ringe in ihrer Polung abwechseln.

Diese Ausführungsform kann ferner zusätzlich (i) mindestens einen aus einem ferromagnetischen Material bestehenden massiven zylindrischen Kern (5) oder aus ihm zusammengesetzten Teile, welcher von dem mindestens einem magnetischen inneren Ring (4) unmittelbar umschlossen wird, und / oder (ii) mindestens einen aus ferromagnetischen Material bestehenden Ring (2) oder einer entsprechenden ringförmigen Anordnung, aufweisen.

In einer weiteren Ausführungsform der Erfindung enthalten die erfindungsgemäßen Magnetdämpfer neben äußeren und/oder inneren radial magnetisierten Ringebenen (1) (4) noch zusätzlich äußere und / oder innere axial magnetisierte Ringebenen mit magnetischen Ringen (11) und / oder (12), welche zwischen den radial magnetisierten Ringebenen (1)(4) bzw. (6) (16) angeordnet sind, und zwar in der Weise, dass sich zwei benachbarte axial magnetisierte Ringebenen durch die entsprechende Polung anziehen. Hierdurch werden die Magnetfelder der radial angeordneten magnetischen Ringe verstärkt.

Gegenstand der Erfindung ist somit ein entsprechender rotationssymmetrischer Magnetdämpfer, welcher zusätzlich zu besagten radial magnetisierten Magneten (1)(4) mindestens einen magnetischen äußeren Ring aus einem oder mehreren Permanentmagneten (11) aufweist, die so außen um das Dämpfungsrohr (3) herum angeordnet oder magnetisiert sind, dass Nord- und Südpol des oder der Magneten axial nach oben oder unten in Bezug auf die Längsachse des Magnetdämpfers weisen, wobei der erfindungsgemäße Magnetdämpfer vorzugsweise mindestens zwei axial magnetisierte äußere Ringe (11) aus Permanentmagneten aufweist, welche durch einen radial magnetisierten äußeren Ring (1)(6) voneinander getrennt sind, wobei die axial gerichtete Polung dieser Magnetringe sich von axial magnetisierter Ringebene zu axial magnetisierter Ringebene abwechselt.

In einer bevorzugten Ausführungsform der Erfindung weist der erfindungsgemäße Magnetdämpfer zusätzlich mindestens einen magnetischen inneren Ring aus einem oder mehreren Permanentmagneten (12) auf, der oder die so im Inneren des Dämpferrohrs (3) angeordnet und magnetisiert sind, dass Nord- und Südpol des oder der Magneten axial nach oben oder unten bezogen auf die Längsachse des Magnetdämpfers weisen, wobei vorzugsweise der Magnetdämpfer mindestens zwei axial magnetisierte innere Ringe (12) aufweist, welche durch einen radial magnetisierten inneren Ring (4) voneinander getrennt sind, wobei die axial gerichtete Polung dieser Magnetringe sich von axial magnetisierter Ringebene zu axial magnetisierter Ring abwechselt.

Vorzugsweise entsprechen die Anzahl der magnetischen Ringe (1) der Anzahl der Ringe (2) aus ferromagnetischem Material, vorzugsweise Stahl. In diesen Fällen haben die Ringe (1) und (2) die gleiche Dicke (in axialer Richtung als auch in radialer Richtung), vorzugsweise von 10 bis 60mm. Bei Verwendung von Magnetringen, bzw. ringförmigen Anordnungen von Stab- oder Würfelmagneten sind solche mit einer Dicke zwischen 30 und 50mm am effizientesten. Es ist jedoch auch möglich, die Ringe (1) ohne entsprechende Außenringe (2) zu verwenden, falls nicht so hohe Dämpfungsdichten erreicht werden müssen. Es ist generell auch möglich einen einzigen breiten äußeren Ring (2) über mehrere magnetische Ringe (1) als Hülse zu schieben und mit diesen fest zu verbinden, beispielsweise durch Verklebung.

Bei Ausführungsformen mit radial magnetisierten äußeren Ringen (1)(6) und gegenüberliegenden gegengesetzlich gepolten radial magnetisierten inneren Ringen (4)(16), werden vorzugsweise ebenso viele äußere wie innere Ringe eingesetzt. Es ist aber auch denkbar, dass mehr äußere oder mehr innere Ringe im erfindungsgemäßen Magnetdämpfer zum Einsatz kommen, wobei sich 1 - 5 Ringebenen bestens bewährt haben . Es können Umstände vorliegen, die es erforderlich machen, nur Ausführungsformen bereitzustellen, welche nur äußere Ringe (1)(6) oder nur innere Ringe (4)(16) aufweisen.

In einer bevorzugten Ausführungsform weist der erfindungsgemäße Magnetdämpfer ausschließlich einen oder mehrere äußere und / oder innere Permanentmagnete auf, wobei die Permanentmagnete radial nach innen oder radial nach außen magnetisiert sind und bei Vorhandensein von mehreren übereinander gestapelten Ringebenen diese abwechselnde Nord-Süd-Magnetisierungsrichtung aufweisen. Es handelt sich hierbei um einen rein passiven Magnetdämpfer.

In einer weiteren bevorzugten Ausführungsform weist der erfindungsgemäße Magnetdämpfer ausschließlich einen oder mehrere äußere und / oder innere Elektromagnet in Form von Spulenringen, wobei die Spulen durchgehend radial magnetisiert sind und bei Vorhandensein von mehreren übereinander gestapelten Ringebenen diese abwechselnde Nord-Süd-Magnetisierungsrichtung aufweisen. Da die Spulen aktiv mit in seiner Stärke und Phase variablen Strom betrieben werden können, handelt es sich hierbei um einen aktiven Magnetdämpfer.

In einer anderen bevorzugen Ausführungsform weist der erfindungsgemäße Magnetdämpfer eine Anordnung von zwei oder mehreren aneinandergrenzende magnetischen äußeren und / oder inneren Ringebenen aus ausschließlich Permanentmagneten auf, wobei sich stets eine Ringebene, bezogen auf das Dämpfer- bzw. Leiterrohr, aus radial magnetisierten Magneten besteht, und die angrenzende andere Ringebene aus axial magnetisierten Magneten besteht, und ferner bei Vorliegen von drei oder mehr, insbesondere vier bis fünf Ringebenen, zwei gleichartige radial magnetisierte Ringebenen durch eine axial magnetisierte Ringebene und zwei gleichartige axial magnetisierte Ringebenen durch eine radial magnetisierte Ringebene getrennt sind, und die Nord-Süd-Magnetisierungsrichtung einer Ringebene entgegengesetzt ist zur Nord-Süd-Magnetisierungsrichtung der nächsten gleichartigen Ringebene. Bei dieser Ausführungsform liegen die Magnete in einer Halbach-Anordnung vor.

In einer weiteren bevorzugten Ausführungsform der Erfindung weist der Magnetdämpfer Ringe aus radial nach innen oder außen magnetisierten Permanentmagneten auf, aber auch eine oder als Elektromagnete fungierende Spulenringe, welche mit Gleichstrom entsprechender Polung oder Wechselstrom variabler und unterschiedlicher Frequenz und / oder Phasenverschiebung betrieben werden können. Hierdurch können semi-aktive und aktive erfindungsgemäße Magnetdämpfer mit variabler steuerbarer Dämpfung erhalten werden.

Die für die erfindungsgemäßen Magnetdämpfer eingesetzten Permanentmagnete können durchgehende kompakte Ringmagnete sein können oder, weil diese oft schwierig sind, herzustellen, magnetische Ringsegmenten oder entsprechend im Verbund ringförmig angeordneten einzelnen Stabmagnete oder anderweitig geformten Einzelmagnete, die mit identischer Polung entsprechend aneinander gereiht sind.

Bei Ausführungsformen mit radial magnetisierten inneren Ringen (mit oder ohne äußeren Ringen), welche an der zylindrischen Innenfläche des Dämpfungsrohrs bei Bewegung entlanggleiten, können diese zusätzlich eine innere Hülse oder einen massiven Kern (5) aus Stahl oder entsprechenden ferromagnetischen Legierungen aufweisen, wobei diese Hülse oder dieser Kern vorzugsweise fest, beispielsweise durch Verklebung, mit dem inneren Ring bzw. den inneren Ringen verbunden ist. Der Kern oder die Hülse kann dabei die selbe axiale Größe aufweisen wie der betreffende innere Ring, er kann aber auch mehrere Ringe abdecken.

Die erfindungsgemäßen magnetischen wie ferromagnetischen Ringe oder deren Ringsegmente weisen üblicherweise eine radiale wie axiale Dicke zwischen 10 und 60mm auf abhängig von der zu dämpfenden Anlage und der benötigten Dämpfungskraft. Dabei kann der ferromagnetische Ring (2) eine größere radiale Dicke aufweisen als der äußere radial magnetisierte magnetische Ring (1), abhängig von der gewünschten Verstärkerfunktion des ferromagnetischen Materials.

Bei den erfindungsgemäßen Magnetdämpfern weist die Trägervorrichtung (10) Halte-, Arretier- und Befestigungsmittel sowie gegebenenfalls Abstandshalter und Stromanschlüsse auf, wobei diese Mittel geometrisch und funktionell so gestaltet sind, dass die magnetischen Ringe und Spulen passgenau entsprechend ihres Durchmessers rotationssymmetrisch einzeln oder mehrfach aufgenommen, geführt, gestapelt, fixiert und in Betrieb genommen werden können, und das dazu passende Dämpfungsrohr (3) passgenau aufgenommen werden kann.

In einer weiteren besonderen Ausführungsform der Erfindung kann ein Magnetdämpfer mit variabel einstellbarer Dämpfung bereitgestellt werden, bei dem besagte Trägervorrichtung (10) so gestaltet ist, dass je nach gewünschter Dämpfung unterschiedlich viele rotationssymmetrische magnetische äußere und/oder innere Ringe aus Permanentmagnetanordnungen und /oder elektromagnetische Spulen in die Trägervorrichtung eingesetzt und ausgetauscht werden können, wobei die magnetischen Ringe bezüglich ihres Innen- und / oder Außendurchmessers an den gewünschten Außen- und / oder Innendurchmesser des Dämpferrohrs (3) angepasst sind. Somit kann der erfindungsgemäße Magnetdämpfer als Art Baukastensystem bereitgestellt werden, aus dem sich der Anwender entsprechend der gewünschten Dämpfung und der vorhandenen zu dämpfenden Anlage oder Maschine die individuelle Dämpfung selbst einfach und variabel durch Auswahl der erforderlichen Bauteile zusammenstellen kann.

Bei jenen erfindungsgemäßen Ausführungsformen, bei denen keine inneren Magnetringe (Permanentmagnete oder Spulen) und keine ferromagnetischen Stäbe oder Hülsen (15) benötigt werden (bei geringeren Magnetfeldstärken), kann das leitfähige, nicht-magnetisierbare Dämpferrohr (3) auch als Stab oder Stange ausgebildet sein.

Die erfindungsgemäßen magnetischen Dämpfer sind bestens geeignet, um in Schwingungstilgern, insbesondere Schwingungstilger basierend auf einem Massependel, eingesetzt zu werden (Pendeltilger).

Gegenstand der Erfindung ist somit ein Schwingungstilger, insbesondere Pendeltilger (7) umfassend mindestens ein Pendelseil oder eine Pendelstange mit einer Pendelmasse und mindestens einen rotationssymmetrischen Magnetdämpfer, wie oben und folgend beschrieben, wobei vorzugsweise der Magnetdämpfer an der Pendelstange oder an der Pendelmasse befestigt ist. In der Regel ist es von Vorteil zwei erfindungsgemäße Pendeltilger einzusetzen welche so angeordnet sind, dass sie die horizontale Schwingungsebene abdecken.

Dabei kann die Trägervorrichtung (10) des Magnetdämpfers an der Pendelmasse oder Pendelstange befestigt sein, beispielsweise unter Verwendung von Kugelgelenken oder Scharnieren, während das Dämpfungsrohr (3) oder die Dämpfungsstange direkt befestigt ist an der zu dämpfenden Maschine oder Anlage, beispielsweise ebenfalls unter Verwendung von Scharnieren oder Kugelgelenken. Umgekehrt kann das Dämpfungsrohr (3) oder die Dämpfungsstange an der Pendelmasse oder Pendelstange befestigt sein, während die Trägervorrichtung (10) des Magnetdämpfers, direkt an der zu dämpfenden Maschine oder Anlage befestigt ist.

Es sei noch einmal erwähnt, dass durch Anpassen der Wandstärke des Rohrs (3) (vorzugsweise zwischen 5 und 15 mmm, insbesondere zwischen 8 und 12 mm) es möglich ist, die Dämpfung über den Schwingweg zu verändern. So ist es möglich eine progressive und/oder degressive Kennlinie zu realisieren. Dies ist zum Beispiel sehr interessant wenn der Tilger (7) im mittleren Schwingbereich eine optimale Dämpfung haben soll um die Resonanzen des Turms einer Windkraftanlage oder eines anderen Bauwerkes zu vermindern. So kann im Extremfall bei großen Schwingwegen des Tilgers, der selbige stärker abgebremst werden. Weiterhin ist es möglich das Rohr (3) aus verschiedenen Materialen zusammenzusetzen, so kann die Dämpfung durch die Änderung des spezifischen elektrischen Widerstands verändert werden.

Eine Kombination von Permanentmagneten mit Elektromagneten und einer Schwingungsüberwachung kann auch helfen, die max. Schwingwege des Tilgers (7) im Extremfall zu begrenzen. Im normalen Betrieb wären die Elektromagnete nicht angeschaltet und die Dämpfung wäre optimal auf den Turm abgestimmt. Sobald die Schwingung des Tilgers (7) durch Extremlasten zu groß wird können die Elektromagnete angeschaltet werden um die Dämpfung zu erhöhen und so den Tilger (7) zu bremsen

In der Praxis ist es von Nöten, das Dämpferrohr (3) bei einem Pendelausschlag berührungsfrei und damit reibungsfrei durch das rotationssymmetrische Magnetsystem (aus Permanentmagneten oder elektromagnetischen Spulen, welche ringförmig um das Dämpfungsrohr angeordnet sind) zu führen, damit der notwenige geringe Abstand zwischen den beiden Bauteilen eingehalten werden kann. Um nun zu verhindern, dass das Dämpfungsrohr (3) mit den äußeren und / oder inneren Ringmagneten kollidiert, ist bei einer weiteren Ausführungsform der Erfindung eine Zentrierung oder Abstandshalterung vorgesehen, welche möglichst reibungsarm gestaltet sein sollte.

Der erfindungsgemäße Schwingungsdämpfer weist somit in der Regel und bevorzugt eine Führungs- und/oder Abstandvorrichtung bzw. Zentrierungsvorrichtung (13) (14) auf, welche vor und/oder hinter dem Bereich positioniert ist, in welchem der Wirbelstrom durch die relative Bewegung zueinander generiert wird. Damit kann der notwendige Abstand in diesem funktional wirksamen Bereich zwischen etwa 0.1mm und 2.0mm reibungsfrei eingehalten werden. Als Abstands- bzw. Zentriervorrichtung kann beispielsweise ein Kugellager, eine Gleitbuchse, ein Rollenlager (13) oder eine Rollenvorrichtung (14) dienen, welche gleichzeitig zur Abstandseinhaltung (durch eine Haltevorrichtung) auch eine sichere Führung des Rohres (z.B. durch eine oder mehrere Führungsrollen) übernimmt. Der Vorteil ist nun, dass nur die Gewichtskräfte des Dämpfungsrohrs (3) auf die Vorrichtung (13(14) wirkt und diese dadurch länger hält.

Der erfindungsgemäße Magnetdämpfer kann entsprechend seines geplantes Einsatzes, der erforderlichen Dämpfungscharakteristik sowie dem verfügbaren Einbauplatz in verschiedenen Größen verwendet werden. Für Windkraftanlagen bietet sich an, einen Magnetdämpfer beispielsweise für einen Pendeltilger mit einem Durchmesser von etwa 50 bis 200mm einzusetzen, Abweichungen nach oben oder unten um bis zu 200% sind ebenfalls möglich. Wie bereits erwähnt, beträgt der Abstand bzw. der Luftspalt zwischen einem magnetischen Ring (4), bzw. einer ringförmigen magnetischen Anordnung, unabhängig davon ob sie aus Permanentmagneten oder Elektromagneten (elektromagnetische Spulen) aufgebaut ist, und der Außenfläche und/oder Innenfläche des Dämpferrohrs (3) etwa zwischen 0.1mm und 2.0mm, vorzugsweise 0.25 - 1.25mm, insbesondere 0.5 - 1.0mm. Ein größerer Abstand bzw. Luftspalt ist prinzipiell möglich und lässt sich auch einfacher herstellen, jedoch verringert sich dabei die Gesamtdämpfung. Erfahrungsgemäß beträgt der Dämpfungsverlust ca. 17,5% (17 - 18%) pro mm Spalt.

Das Dämpfungsrohr (3) des erfindungsgemäßen Dämpfers besteht, wie bereits gesagt, aus einem leitfähigen Material, vorzugsweise Metall, beispielsweise aus Aluminium oder Kupfer oder Legierungen dieser Metalle. Es hat sich gezeigt, dass eine Rohrwandstärke zwischen 8 bis 10mm die höchste Effizienz im Sinne einer Dämpfung bewirkt.

Für andere Einsatzgebiete außer Schwingungstilger, insbesondere für Windkraftanlagen, können kleinere und größere Durchmesser, Magnetgrößen und Rohrdicken optimal sein.

Mit dem erfindungsgemäßen Magnetdämpfer können je nach Beschaffenheit Dämpfungsdichten vorzugsweise zwischen 1500 und 3000 kNs/m x m³ erreicht werden. Dadurch kann Magnetmaterial und Bauraum gespart werden.

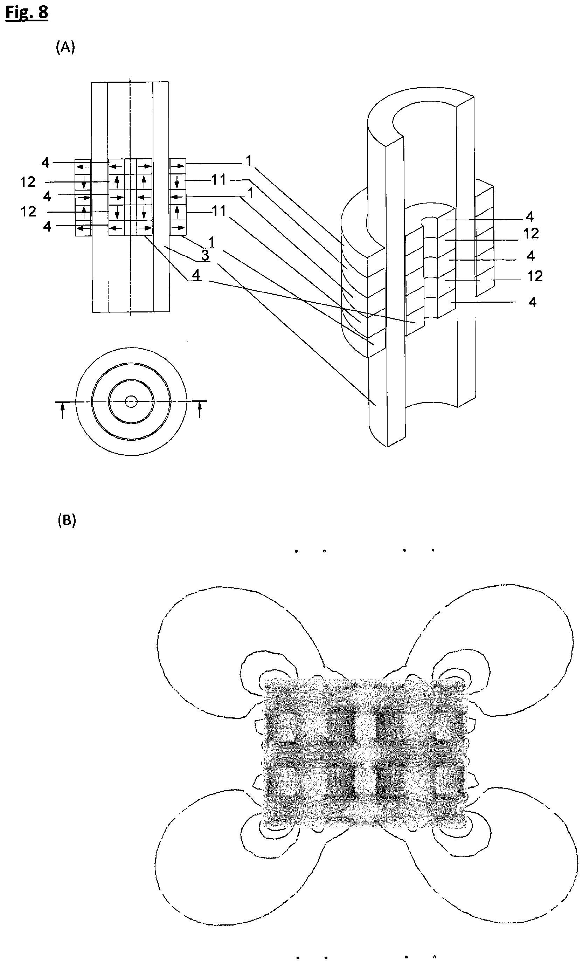

Es ist auch möglich, die erfindungsgemäßen Magnetdämpfer als radiales, passivers Magnetlager einzusetzen: Bei höheren Geschwindigkeiten verschieben sich die Wirbelströme im Rohr (3) in axialer Richtung. Durch den Versatz der Wirbelströme zu den ringförmigen Magnetanordnungen (1) entstehen radialen Kräfte zwischen dem Rohr (3) und den Magnetanordnungen (1). Diese radialen Kräfte wirken wie ein radiales Lager was die Magnetringe zentrieren will. Dieser Effekt kann genutzt werden um ein kontaktlose Lagerung zwischen Magnetring (1) und Rohr (3) zu verwirklichen. Die Magnetanordnung gemäß Fig. 8 (Halbach-Anordnung) eignet sich dabei am besten. In Prototypen von Magnetschwebebahnen wird dieser Effekt bereits benutzt um die Levitation nur mit Permanentmagneten zu erstellen (Inductrack). Dort sind die Magnete flach angeordnet und erzeugen ab einer bestimmten Geschwindigkeit einen vertikalen Auftrieb. Horizontal ist die flache Anordnung instabil und es wird eine weitere Anordnung von Magneten benötigt um auch diese Richtung zu stabilisieren. Hier sind die Ringmagnete (1) des Dämpfers von Vorteil, da diese in jede radiale Richtung stabil und zentrierend sind. Ein solches radiales Magnetlager, eignet sich auch um Gleitlager zu entlasten. Radial wirkende Kräfte zwischen Rohr (3) und Magnetringen (1) würden im Stillstand und bei niedrigen Geschwindigkeiten von konventionellen Gleitlagern abgefangen werden. Bei höheren Geschwindigkeiten, welche den größten Verschleiß erzeugen, werden solche Gleitlager durch das Magnetlager komplett entlastet. Es können z.B. zwei radiale Magnetlager mit Halbach-Anordnung mit den Magnetringen (1) kombiniert werden. Dadurch lassen sich die Magnetlager auf niedrige Geschwindigkeiten optimieren während die Magnetringe (1) dazwischen für die eigentliche axiale Dämpfung sorgen.

Ein Vorteil des Einsatzes von Magnetdämpfern, insbesondere von Permanentmagneten, in der Schwingungs- und Lagertechnik besteht darin, dass sie immer funktionieren. Es wird in der Regel keine Steuerung oder Energieversorgung benötigt. Der Temperatureinfluss auf die Dämpfungseigenschaften ist minimal und es wird keine zusätzliche Temperaturkompensation benötigt.

Im Gegensatz zu bisherigen bekannten Magnetdämpfern sind bei den erfindungsgemäßen Magnetdämpfern die induzierten Wirbelströme im Rohr (3) umlaufend. Dadurch ist der Wirbelstrom gleichmäßiger und die Effizienz des Dämpfers ist höher. Die Wirbelströme sind kreisförmig und bilden ein Magnetfeld das dem Magnetring (1) ähnelt. Im Gegensatz hierzu bilden sich die Wirbelströme bei dem in der EP 2 696 072 beschriebenen Magnetdämpfer um die Vorder- und Hinterkanten der dort beschriebenen einzelnen Magnete aus mit der Folge, dass die Leiterplatte breiter gefertigt werden muss, weil die generierten Wirbelströme breiter sind als die Magnete.

Ferner ist die rotationssymmetrische Geometrie des erfindungsgemäßen Dämpfers einfacher zu fertigen und ermöglicht überall dort einen Einsatz, wo bisher normale rotationssymmetrische Dämpfer, wie z.B. Fluiddämpfer, verwendet werden. Je nach Größe sind radialmagnetisierte Magnetringe (1) technisch oft nur aufwendig oder gar nicht mehr herzustellen. Hier es von Vorteil die die ringförmigen Magnetanordnungen aus einzelnen flachen, beispielsweise stab- oder würfelförmigen Magneten herzustellen, wodurch größere Durchmesser verwirklicht werden können.

Der Dämpfer hat vor allem Vorteile in Einsatzgebieten mit großen Temperaturunterschieden und Anwendungen mit konstanten Dämpfungskoeffizienten, wie z.B. bei Turmtilgern oder Rotorblatttilgern in Windenergieanlagen. Die erfindungsgemäßen Magnetdämpfer bzw. diese enthaltende Schwingungstilger sind zur Dämpfung von Schwingungen aller Art insbesondere zwischen 5Hz und 200 oder im Körperschallbereich in Maschinen und Anlagen, insbesondere Windkraftanlagen, geeignet und vorgesehen.

Somit ist letztlich auch Gegenstand der Erfindung eine Windkraftanlage, welche mit oben und in den Ansprüchen beschriebene Magnetdämpfern und Schwingungstilgern ausgestattet ist.

Der erfindungsgemäße Magnetdämpfer kann aber auch in hochfrequenten Tilgern bei anderen Anlagen als Dämpfungselement eingesetzt werden. Durch die kontakt- und reibungslose Dämpfung hat der Magnetdämpfer eine sehr hohe Lebensdauer und hat keine Verschleißerscheinungen. Im Kraftfahrzeugbereich und Schienenbereich sind die Dämpfer geeignet, allerlei Stöße und Vibrationen zu dämpfen, da auch hier große Temperaturunterschiede vorliegen können. Durch die Kombination des erfindungsgemäßen Magnetdämpfers mit z.B. einer Stahlfeder kann auf dämpfende Werkstoffe wie z.B. Elastomere verzichtet werden. Der erfindungsgemäße Magnetdämpfer kann auch überall dort eingesetzt werden, wo es notwendig ist Kontaminationen zu vermeiden (z.B. in der Lebensmittelindustrie), da er kontaktlos und ohne Dämpfungsmedium arbeitet

Die erfindungsgemäßen Magnetdämpfer können, wie bereits oben erwähnt, auf verschieden Weise je nach benötigter Dämpfungsart bereitgestellt werden:

| | Dämpfungsart | Funktionselement | Beschreibung |
|---|---|---|---|
| 1 | Passiv | Permanentmagnete | Magnete bremsen die Relativbewegung in Abhängigkeit von der Geschwindigkeit |
| 2 | Semi-Aktiv | Spulen mit Gleichstrom | Durch die Stromstärke lassen sich die Magnetfelder einstellen und ermöglich eine variable Dämpfung |
| 3 | Aktiv | Spulen mit Wechselstrom | Durch geeignete Wechselspannung kann der Dämpfer aktiv eine Bewegung des Tilgers erzeugen und die Dämpfung steuern |

*Passiv:* Die äußeren Magnetringe (1) können je nach gewünschter Dämpfung gestapelt werden und zusätzlich noch mit inneren Magnetringen (5) kombiniert werden.
*Semi-Aktiv:* Ein Ringsegment kann mit zwei Spulen gefertigt werden. Die Spulen (6) lassen sich beliebig stapeln und mit inneren Spulen (4B) kombinieren um die gewünschte Dämpfung zu erreichen.
*Aktiv:* Die mit Wechselstrom versorgten Spulen können ebenfalls gestapelt werden um mehr Wirbelströme und damit größere Antriebsleistungen zu erreichen. Innere Spulen erhöhen dabei auch die Kräfte und Leistungen.
*Kombinationen:* Passive, Semi-Aktive und Aktive Dämpfungen können jederzeit miteinander kombiniert werden. Es ist auch möglich alle Arten in einen Dämpfer zu kombinieren um für die verschiedensten Betriebsarten des Tilgers die passende Dämpfung zu ermöglichen.

Die erfindungsgemäßen Magnetdämpfer können auch in Form eines Kits oder Baukastensystems zur Verfügung gestellt werden. Es bietet sich nämlich an, ein Baukastensystem zu entwickeln mit einem einheitlichen Durchmesser. Die Magnetringe (1) mit den Ringen (2) können als eine Einheit zusammengefügt werden. Der Ring (2) verfügt dabei über einen passenden Absatz auf beiden Seiten damit sich die Ringe stapeln lassen und gleichzeitig zentriert werden. Der gleiche Absatz wird auch für die Spulen mit Gleich- und Wechselstrom verwendet. Dadurch ist es ohne weiteres möglich die verschiedenen Arten zu stapeln und miteinander zu kombinieren. Außerdem wird dadurch die Austauschbarkeit vereinfacht und eine nachträgliche Erweiterung mit z.B. aktiver Dämpfung ist kein Problem. Durch dieses Baukastensystem ist es auch möglich radiale passive Magnetlager vor und hinter den Dämpfungselementen anzubringen.

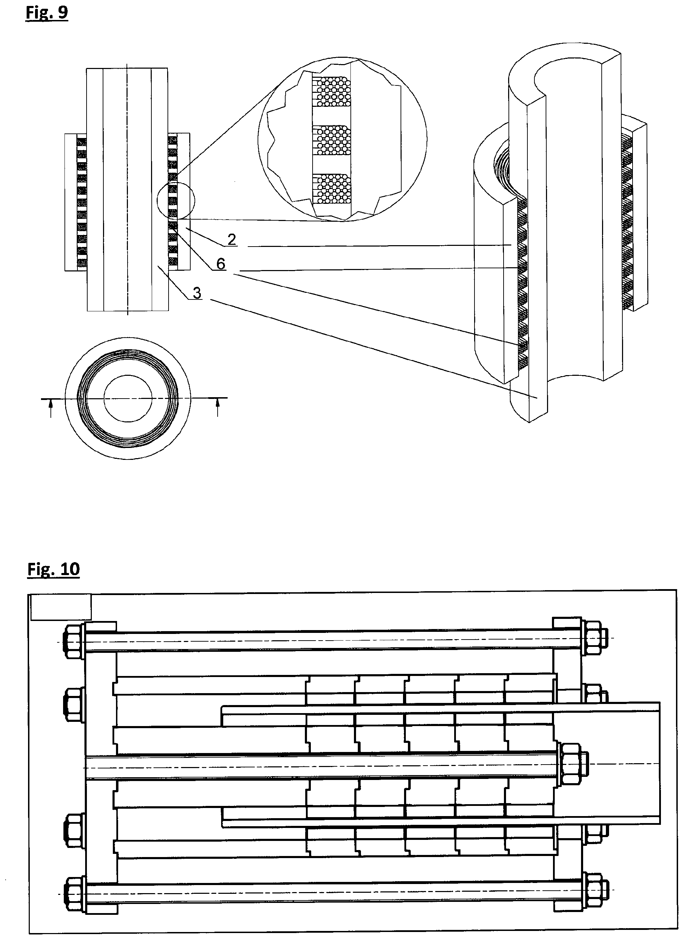

Ferner können auch die äußeren Ringe (1) mit Endplatten und externen Schrauben miteinander verspannt werden. Die inneren Ringe (4) können mit einer zentralen Schraube miteinander verspannt werden. In Fig. 10 ist ein Beispiel mit jeweils fünf äußeren und inneren Magnetringen zu sehen.

Es ist prinzipiell denkbar bei den erfindungsgemäßen Magnetdämpfern auf eine ringförmige Anordnung zu verzichten und stattdessen Rechteckrohre, z.B. Quadratrohre zu verwenden. Dann sind die Magnete einfacher herzustellen, jedoch sind die Wirbelströme schwerer zu berechnen und an den Ecken des Quadratrohrs kann es zu Verlusten kommen da die Magnetfelder sich nicht ideal überlagern. Ein Vieleck aus acht oder mehr Ecken kommt dem Kreis immer näher und der Magnetdämpfer wird effizienter gegenüber dem Quadratrohr. Jedoch wird es mit zunehmender Anzahl von Ecken immer unwirtschaftlicher gegenüber der rotationssymmetrischen Lösung. Ein weiterer Nachteil von Vielecken ist das eine Verdrehung der Achse unbedingt verhindert werden muss da ansonsten die Magnete mit dem Rohr kollidieren. Dies ist bei der rotationsymmetrischen Lösung kein Problem, dort kann man den Dämpfer axial verdrehen ohne Kollisionen.

### Einzelheiten der Erfindung

Im folgenden werden die im Text und in den Abbildungen verwendeten Bezugsgrößen näher beschrieben:
- 1: äußerer radial magnetisierter Magnetring aus Permanentmagneten
- 2: ferromagnetischer äußerer Ring
- 3: Dämpfungsrohr (oder Dämpfungsstab)
- 4: innerer radial magnetisierter Magnetring aus Permanentmagneten
- 5: ferromagnetischer Kern oder Hülse für innere Magnetringe
- 6: äußerer elektromagnetischer Spulenring (Spule)
- 7: Pendeltilger mit Pendelseil/stab und Pendelmasse
- 8: Kugelgelenk Tilger-Dämpfer
- 9: Kugelgelenk Wand-Dämpfer
- 10: Trägervorrichtung für erfindungsgemäßen Dämpfer, insbesondere der Magnetvorrichtungen 1, 4, 5, 6, 11, 12
- 11: äußerer axial magnetisierter Magnetring aus Permanentmagneten
- 12: innerer axial magnetisierter Magnetring aus Permanentmagneten
- 13: Führungs- / Abstandsvorrichtung ggf. inkl. Gehäuse
- 14: Rollenvorrichtung mit Halterung und Führungsrolle(n)
- 15: inneres ferromagnetisches Rohr oder Stab für Dämpferrohr (3)
- 16: innerer elektromagnetischer Spulenring bzw. Spule

Im Folgenden wird die Erfindung anhand der Abbildungen näher beschrieben:

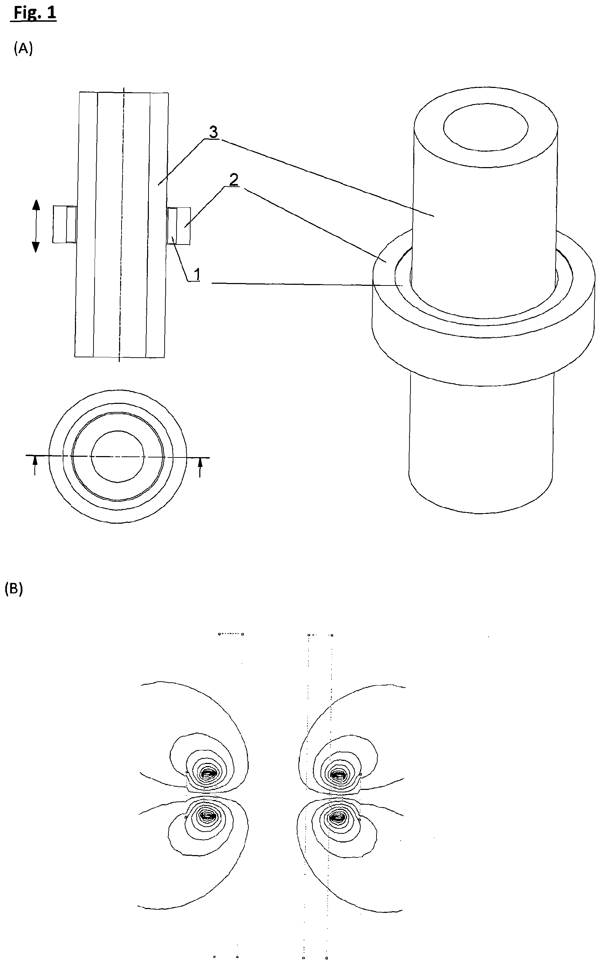

Fig. 1 (A) stellt schematisch einen erfindungsgemäßen Magnetdämpfer (A) inklusive das Magnetfeld des geschlossenen Magnetrings dar (B). Der Magnetdämpfer umfasst das Dämpfungsrohr (3), welches aus einem leitfähigen aber nicht ferromagnetischen Material/Metall gefertigt ist, vorzugsweise Aluminium oder Kupfer oder entsprechende geeignete Legierungen. Das Rohr ist unter Einhaltung eines geringen Abstandes berührungsfrei und damit reibungsfrei umschlossen von einem Magnetring (1), letzterer wiederum direkt und unter Berührung oder fester Verbindung von einem Ring aus einem ferromagnetischen Material, beispielsweise Eisen, Eisenlegierung oder Stahl mit einem hohen Eisengehalt. Dadurch wird die Magnetwirkung des Magnetringes verstärkt. Durch Relativbewegung des Dämpfungsrohres (3) zu dem Magnetring (1) - Ring (2) Bauteilkonstrukt entsteht ein Wirbelstrom der ein entsprechend gerichtetes Magnetfeld erzeugt, wodurch die Relativbewegung abgebremst wird. Falls eine geringere Magnetdichte gewünscht ist, kann auf den Verstärkungsring (2) verzichtet werden.

Der Magnetring (1) ist idealerweise ein geschlossener Ringmagnet mit radialer Magnetisierung . Dabei befinden sich z.B. der Nordpol auf der Innenfläche und der Südpol auf der Außenfläche. Die Magnetisierungsrichtung kann auch genau anders herum sein. Als Magnetmaterial eignen sich z.B. Permanentmagnete aus NdFeB, es können aber auch andere Magnete verwendet werden. Wie z.B. Magnete aus SmCo, die sind nicht ganz so stark wie NdFeB Magnet dafür ist ihre Temperaturbeständigkeit höher und die Temperaturabhängigkeit noch geringer.

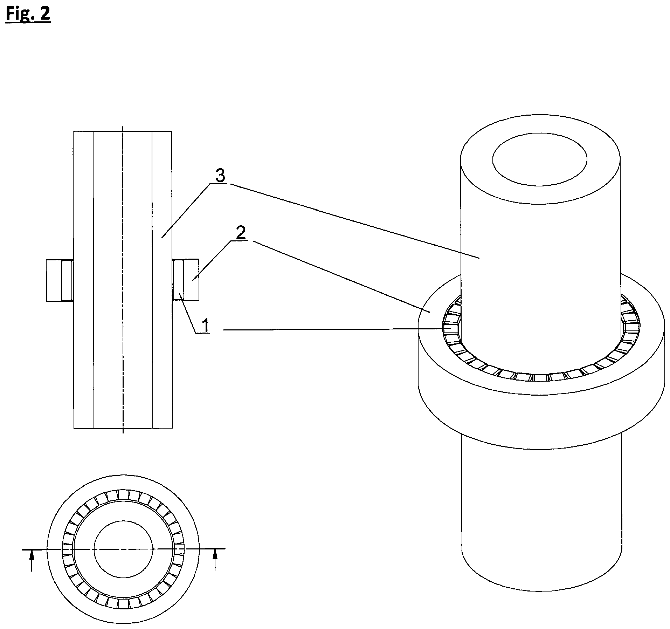

Da geschlossene Ringmagnete mit radialer Magnetisierung technisch schwierig herzustellen und sehr teuer sind, kann der Magnetring (1) auch aus einzelnen Magneten (1A) aufgebaut sein, wie in Fig. 2 dargestellt. Diese einzelnen Magnete sind vorzugsweise Stab- oder Würfelmagnete, die mit der Nord- oder Südpol nach Innen radial in Bezug auf das Dämpfungsrohr (3) ausgerichtet sind (Fig. 2). Es ist auch möglich, flache Magnetkreissegmente (z.B. 90° Segmente) herzustellen und zu einem Ring zusammenzusetzen. Für den Fall, dass einzelne Magnete (1A)den Magnetring (1) bilden, ist es außerdem möglich jeden zweiten Stabmagneten so zu verschieben das ein Schachbrett-Muster von Nord- und Südpolen entsteht. So kann Einfluss auf den Grad der Dämpfung genommen werden.

Das Dämpfungsrohr (3) besteht aus einem elektrisch sehr gut leitfähigen Material, vorzugsweise Metall, insbesondere Aluminium oder Kupfer oder Legierungen aus diesen Metallen. Je dicker das Material des Dämpfungsrohres, desto geringer ist der elektrische Widerstand und desto höher sind die induzierten Wirbelströme.

Der Verstärkerring (2) besteht vorzugsweise aus normalem Stahl mit einem möglichst hohen Eisen- und niedrigen Kohlenstoffgehalt. Der hohe Eisengehalt ist wichtig, damit das Material "weichmagnetisch" ist. Das bedeutet, dass das Material leicht zu magnetisieren ist. Es können alternativ auch alle anderen Materialien, die "weichmagnetisch" sind, verwendet werden. Der Magnetring (1) kann beispielsweise in den Ring (2) eingeklebt werden; die beiden Ringe können aber auch gegeneinander verklemmt oder anderweitig miteinander fest verbunden werden. Der Stahlring (2) verstärkt das Magnetfeld im Inneren und schirmt gleichzeitig das Magnetfeld nach außen hin ab. Der erfindungsgemäße Magnetdämpfer arbeitet auch ohne Stahlring, jedoch wird dadurch die Dämpfung kleiner ausfallen.

Der Luftspalt zwischen Magnetring und dem Dämpfungsrohr sollte klein sein, damit die Dämpfung möglichst hoch ist. Durch einen größeren Luftspalt / Abstand ist das Magnetfeld im Rohr 3 schwächer und es entstehen geringere Wirbelströme. Erfindungsgemäß hat sich ein Abstand zwischen etwa 0.1mm und 2.0mm als besonders wirksam erwiesen.

Es ist auch möglich, den Luftspalt bzw. Abstand absichtlich zu variieren, um damit die Dämpfung steuerbar zu verändern. So kann z.B. der Abstand zwischen Magnetring und dem Dämpfungsrohr in Abhängigkeit von der Position des Magnetrings in Bezug auf das Dämpfungsrohr (3) variiert werden. Dies ist insbesondere bei Verwendung mehrerer Magnetringanordnungen (1) von Nutzen. Dadurch lassen sich z.B. progressive/degressive Dämpfungskennlinien verwirklichen.

Eine weitere Möglichkeit zum Einstellen der Dämpfung ist das Anpassen der Wandstärke des Rohrs (3) über die Länge. So kann zum Beispiel bei gleich bleibenden Außendurchmesser der Innendurchmesser variiert und somit die Dämpfung in Abhängigkeit vom Innendurchmesser über die Länge des Rohres (3) geändert werden.

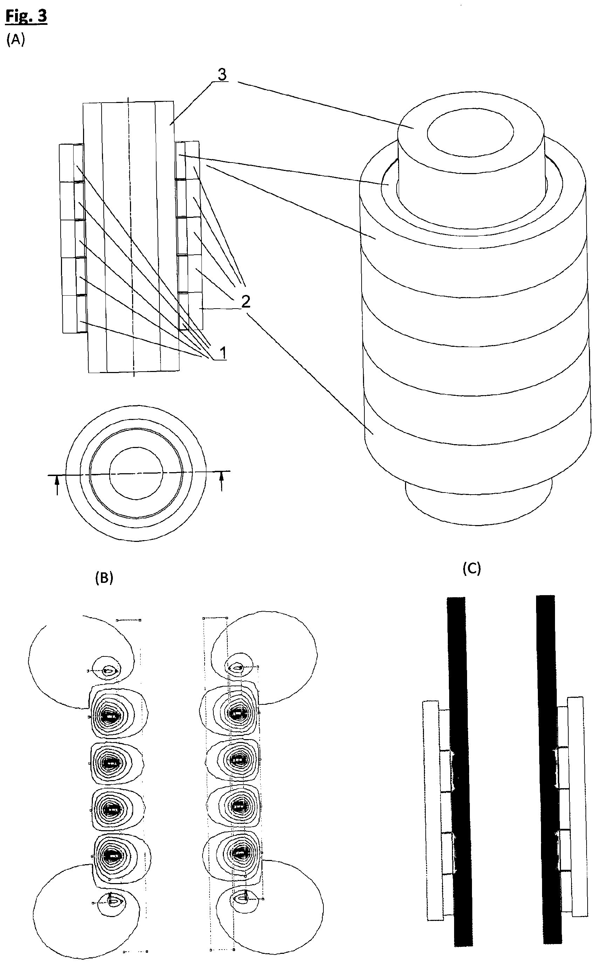

Fig. 3(A) zeigt einen erfindungsgemäßen Magnetdämpfer, welcher im Unterschied zu den Ausführungsformen der Fig. 1 und 2 mehrere äußere Magnetringe (1)(1A) mit entsprechenden Verstärkerringen (2) aufweist. Die Ringe sind dabei dicht an dicht gestapelt und weisen abwechselnde Polung von einem Magnetring (1) zum benachbarten Magnetring (1) auf. Um die Dämpfung zu steigern, lassen sich mehrere Magnetringe 1 stapeln (Fig.3). Von Ring zu Ring wird der magnetische Pol so abgewechselt, dass sich entweder der Nord- oder der Südpol auf der Innenseite befindet. Dadurch verstärken sich die Magnetfelder gegenseitig und der Wirkungsgrad des Dämpfers steigt. Zwei Magnetringe (1) sind so mehr als doppelt so stark als ein einzelner Magnetring (1) (ca. 3,5x). Diese Verstärkung reduziert die benötigte Anzahl von Magnetringen 1 auf ein Minimum. Mit zunehmender Anzahl Magnetringe lässt sich die Gesamtdämpfung schrittweise erhöhen, wodurch wiederum die Dämpfung des Schwingungssystem gesteuert werden kann. Fig.3 (B) stellt das Magnetfeld der fünf Magnetringe des erfindungsgemäßen Magnetdämpfers aus Fig. 3 (A) dar, und Fig. 3(C) gibt die bei Relativbewegung induzierten Wirbelströme im Rohr (3) wieder.

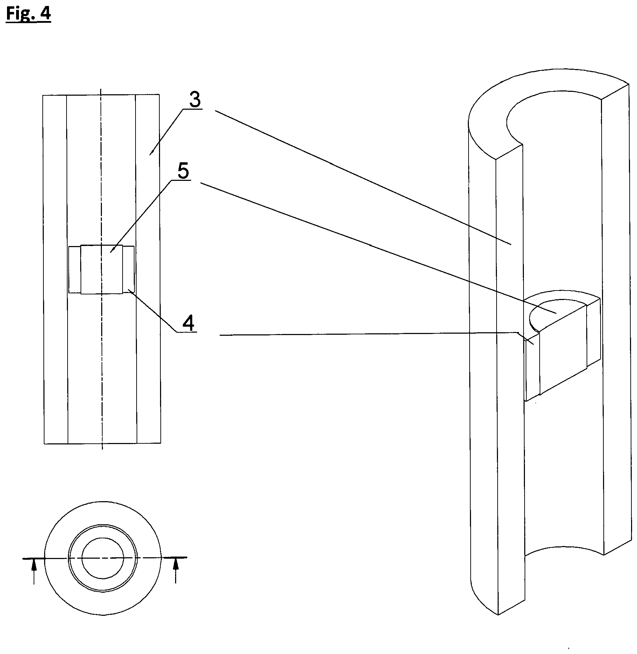

Fig. 4 stellt eine weitere Ausführungsform des erfindungsgemäßen Magnetdämpfers dar. Hierbei wird anstelle des äußeren Magnetringes (1) nur ein innerer Magnetring (4)(4A) verwendet, der im Inneren des Dämpfungsrohres (3) platziert ist und den entsprechenden berührungsfreien Abstand zur Innenfläche des Rohres (3) aufweist. Anstelle des äußeren Verstärkungsringes (2) tritt ein Stab oder Kern, oder eine Hülse (5) aus ferromagnetischem Material, vorzugsweise aus Stahl, welcher durch den inneren Magnetring (4) geschoben ist und mit diesem zusammen bewegt wird. Der Innere Magnetring (4)(4A) ist dabei mit (5) fest verbunden, beispielsweise verklebt. Dieser Aufbau bietet sich an, im Stand der Technik bekannte Fluiddämpfer zu ersetzen.

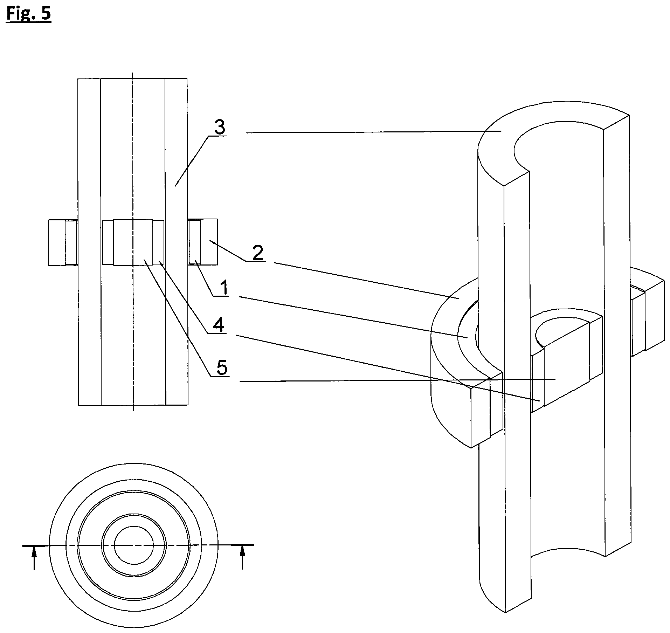

Um den Wirkungsgrad der Dämpfung noch weiter zu erhöhen, ist es möglich, einen inneren Magnetring (4)(4A) und einen äußeren Magnetring (1)(1A) in Kombination zu verwenden, wie dies in Fig. 5 an einem Magnetringpaar dargestellt ist. Dabei werden die beiden gegenüberliegenden und durch das Dämpfungsrohr (3) getrennten Magnetringe (1)(1A) und (4)(4A) so gepolt, dass sie sich anziehen. Dadurch ist das Magnetfeld im Rohr (3) über die gesamte Wandstärke annähernd konstant. Analog Fig. 3 (A) können der innere Magnetring (4)(4A) und der äußere Magnetring (1) mit abwechselnder Polung gestapelt werden, um die Dämpfung zu verstärken. Es ist auch hier möglich, den äußeren Ring (2) und/oder den inneren Kern (5) wegzulassen, falls geringere Magnetdämpfung erforderlich sein sollte. In Fig. 5 ist die Variante mit beiden Elementen (2) und (5) dargestellt.

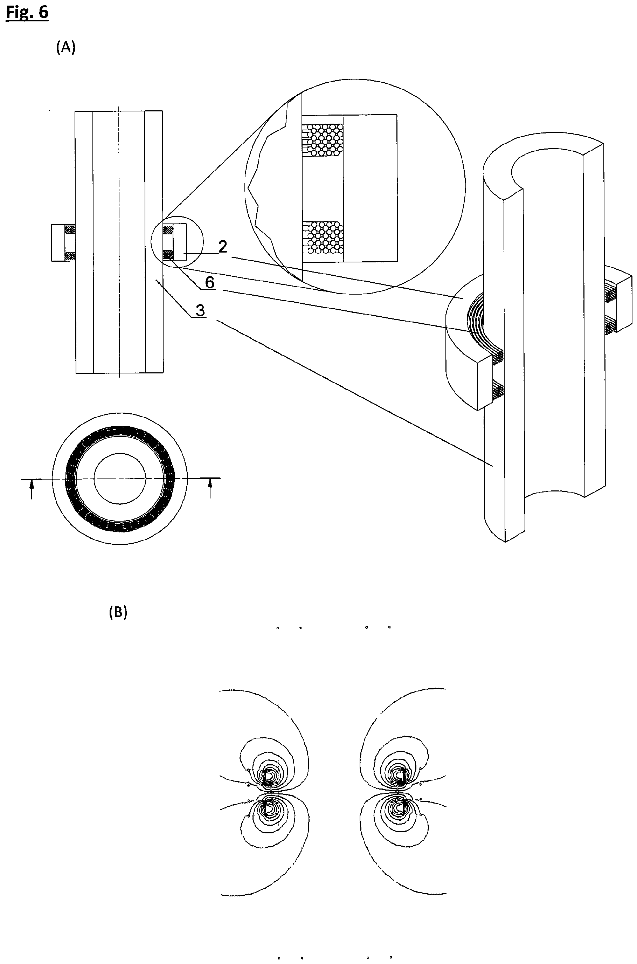

Fig. 6(A) zeigt eine weitere Ausführungsform des erfindungsgemäßen Magnetdämpfers mit einem äußeren Magnetring (1) und einem ferromagnetischem Ring (2). Hierbei sind jedoch die Permanentmagnete durch Elektromagnete in Form von zwei gewickelten Spulenringen (6) ersetzt worden, welche bei Stromdurchfluss ein Magnetfeld generieren. Jeder Spulenring (6) kann aus einer Wicklung aufgebaut sein, oder aber aus mehreren vorzugsweise miteinander verbundenen elektromagnetischen Spulen (1B)bestehen. Um einen von Strom durchflossenen Leiter entsteht ein Magnetfeld. Dieses Magnetfeld lässt sich durch die Wicklungen der Spule verstärken. Die Stromrichtung ist in beiden Spulenringen (6) entgegengesetzt und das Magnetfeld ähnelt dem des Magnetrings (1) (Fig. 6 (B), siehe auch Fig.1 (B)). Die Magnetfelder der Spulenringe (6) können auch hier durch Verstärkungsringe (2) erhöht werden. Dadurch lässt sich die Dämpfung mit dem Strom einfach an und ausschalten. Außerdem kann die Dämpfung über die Veränderung der Stromstärke variiert werden. Wie bei den Magnetringen (1) (4) (1A) (4A) ist es auch in einer weiteren hier nicht gezeigten Variante möglich, die Spulenringe (6) zu stapeln und innere (4B) und äußere (1B) Spulenringe zu verwenden auch in Kombination. Fig. 6B zeigt das Magnetfeld der stromdurchflossenen Spulen.

In einer anderen nicht gezeigten Variante dieser Ausführungsform können Permanentmagnete (1A)(4A) mit Elektromagneten (1B)(4B) kombiniert werden, wobei sich folgende Möglichkeiten ergeben: (i) Die Permanentmagnete sorgen für eine Grunddämpfung. Die zuschaltbaren Elektromagnete können die Dämpfung weiter erhöhen für Situationen, in denen eine höhere Dämpfung erforderlich ist; und (ii) die Permanentmagnete sorgen für eine Grunddämpfung. Die zuschaltbaren Elektromagnete können die Permanentmagnete "ausschalten", indem ihr Magnetfeld dem Magnetfeld der Permanentmagnete entgegengerichtet ist. Dadurch kann man den Dämpfer ausschalten wenn es erforderlich ist.

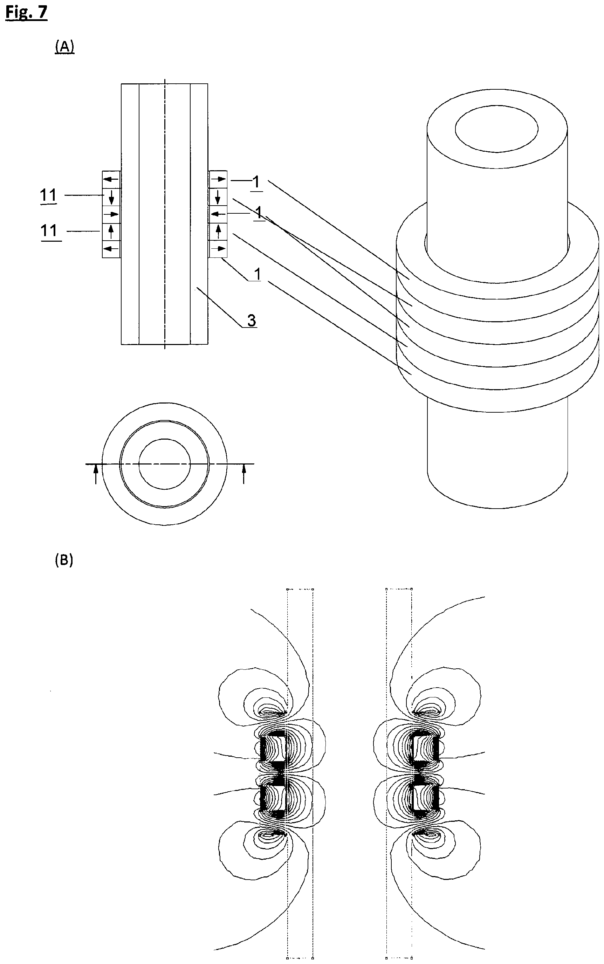

Fig. 7 und Fig. 8 stellen zwei Varianten (Fig. 7(A), Fig. 8(A)) einer weiteren Ausführungsform des erfindungsgemäßen Magnetdämpfers dar, bei der nicht nur radial (in Bezug auf das Dämpfungsrohr (3)) ausgerichtete Magnetfelder (durch Permanentmagnete und / oder Elektromagnete) sondern auch axial (in Bezug auf das Dämpfungsrohr (3)) ausgerichtete Magnetfelder (11)(12) zum Einsatz kommen, was auch an sich als Halbach-Anordnung bekannt ist. Fig. 7 entspricht dabei bis auf die besagte Halbach-Anordnung der Magnete der Ausführungsform der Fig. 3, weist also äußere Magnete (1)(11) auf. Fig 8 weist zusätzlich zu Fig. 7 noch innere Magnete in Halbach-Anordnung auf (4)(12). Die entsprechenden Magnetfelder sind ebenfalls dargestellt (Fig. 7(B), Fig. 8 (B)).

Die gestapelten Magnetringe können in beiden Varianten auch so magnetisiert sein, dass sich das Magnetfeld auf einer Seite verstärkt, während es auf der anderen Seite fast verschwindet. Die Pfeile in den Magnetringen zeigen in Richtung des jeweiligen Nordpols. Die Magnetringe sind abwechselnd axial und radial magnetisiert.

Der Vorteil dieser Anordnung ist, dass man ein stärkeres Magnetfeld dort erzeugt, wo es gebraucht wird und ein schwächeres Magnetfeld, wo es nicht gebraucht wird. Dadurch spart man sich die Abschirmung durch äußere Ringe (2). Außerdem ist es auch möglich eine Halbach-Anordnung im Inneren des Rohrs 3 zu verwirklichen und mit einer äußeren Halbach-Anordnung zu kombinieren. Auch hier kann man die geschlossenen Magnetringe durch einzelne Magnete ersetzen. Mit Würfel- oder Stabmagneten lassen sich alle Ringe (axial und radial magnetisiert) zusammensetzen.

Fig. 9 zeigt eine weitere Anordnung des erfindungsgemäßen Magnetdämpfers, die aus einer Reihe von äußeren Spulenringen (6) bzw. von Spulenanordnungen zusammengesetzt ist und mit der sich eine aktive Dämpfung realisieren lässt. Wird ein Spulenring (6) von elektrischem Strom durchflossen entsteht um diese ein Magnetfeld. Werden die Spulenringe (6) in einer bestimmten Art und Weise unterschiedlich an- und abgeschaltet, wandern die Magnetfelder entlang des Rohrs (3). Eine Möglichkeit ist an jeden einzelnen Spulering (6) einen eigenen Wechselstrom anzulegen. Der Wechselstrom von einer zu anderen Spule hat dabei einen bestimmten Phasenwinkel. Dadurch hat jede Spule zu einem anderen Zeitpunkt seinen maximalen Strom. Als Frequenz eignet sich z.B. 50Hz oder 60Hz und der Phasenwinkel von Spule zu Spule (6) liegt zwischen 30° und 120°. Durch die bewegten Magnetfelder werden Wirbelströme induziert, welche ebenfalls anfangen zu wandern. Die Wirbelströme üben eine axiale Kraft auf das Rohr aus und beschleunigen es. So kann aktiv eine Kraft auf den Tilger erfolgen um z.B. stärker abzubremsen oder den Tilger aktiv auf einer anderen Frequenz schwingen zu lassen. Um den Wirkungsgrad bei unterschiedlichen Geschwindigkeiten zu erhöhen, kann mit Frequenzumrichtern die Frequenz und der Phasenwinkel angepasst werden. Eine Kombination mit inneren Spulenringen (16) (nicht gezeigt) erhöht die Kräfte um ein Vielfaches.

Fig. 10 zeigt einen in einem Trägergestell eingespannter Magnetdämpfer mit fünf inneren und äußeren Magnetringen und einem Dämpfungsrohr (3), welches durch die festgespannten Magnetvorrichtungen bewegt wird.

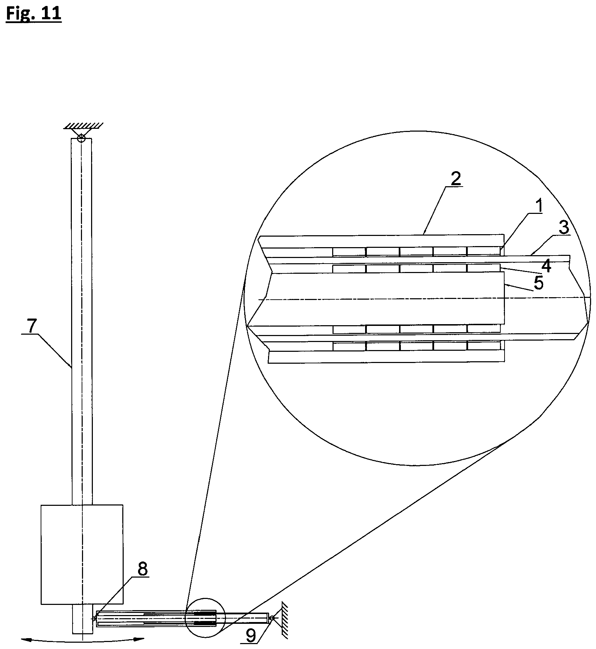

Fig. 11 zeigt einen Pendeltilger (7), welcher mit einem erfindungsgemäßen Magnetdämpfer ausgestattet ist, welcher äußere wie innere Magnetelemente (1)(4) und einen festen Kern (5) aufweist. Der Tilger kann ein einfaches Pendel oder Transversalpendel sein mit einer Pendelmasse an einem Pendelstab oder Pendelseil. Die Schwingbewegungen des Tilgers 7 erzeugen kleine Winkel die durch einfache Kugelgelenke (8) und (9), ausgeglichen werden können. Die Magnetdämpfer können in jede Position und Lage eingebaut sein, in der horizontalen Lage wirken die Dämpfer am effizientesten. Dafür ist auch der benötigte Fahrweg des Dämpfers am größten, wenn dieser horizontal eingebaut ist.

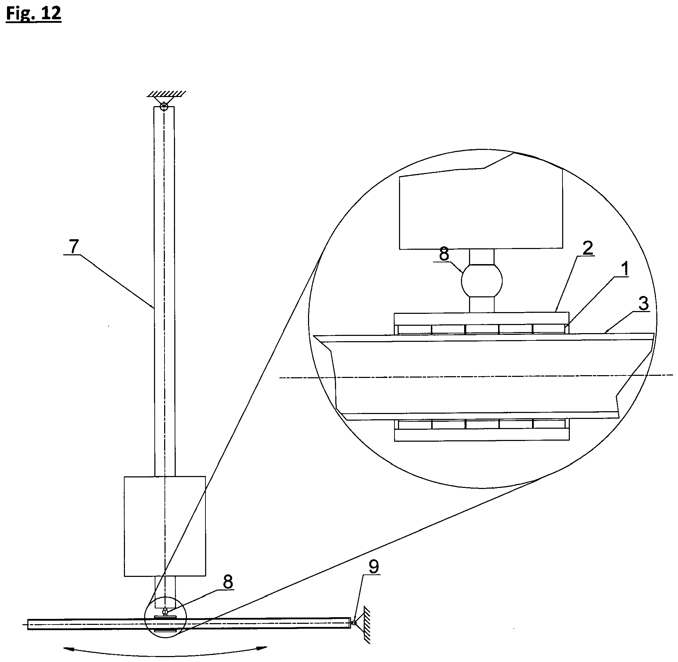

In Fig.12 ist ein Pendeltilger (7) dargestellt, der dem aus Fig. 11 entspricht. Im Gegensatz zu diesem, weist der verbaute Magnetdämpfer bei dieser Ausführungsform keine inneren Magnetringe (4) auf. Dies bewirkt, dass der Weg, den das Dämpferrohr wirksam bewegbar ist, um mehr als das doppelte vergrößert wird.

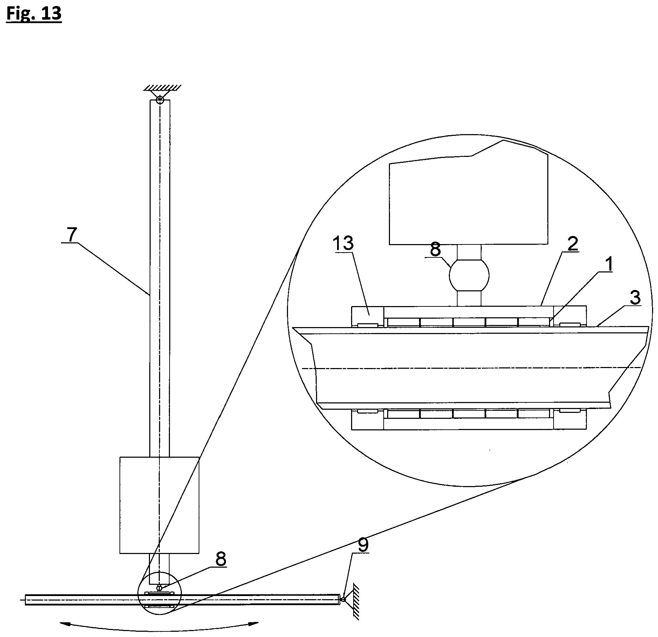

Fig. 13 bildet im Wesentlichen den Pendeltilger aus Fig. 12 ab, jedoch besitzt er zusätzlich an beiden Enden des Rohr-Bereiches, in dem die Dämpfung wirksam wird, eine Führungs- und / oder Abstandsvorrichtung bzw. Zentriervorrichtung (13) (14). Diese soll gewährleisten, dass das Dämpfungsrohr (3) nicht an die Magneteinrichtungen (1) (4) im Inneren und / oder außen am Rohr (3) anstößt, sich also reibungsfrei und damit berührungslos in dem betreffenden Bereich bewegen kann, und außerdem sicher durch diesen Bereich geführt wird. Die Vorrichtung (13) (14) kann beispielsweise ein Gleit- oder Rolllager sein, beispielsweise eine Gleitbuchse oder ein Kugellager, sie kann aber auch eine einfache Halterung sein, die mit einem nicht-bewegten Teil der Anlage verbunden ist.

Fig. 14 zeigt einen entsprechenden Pendeltilger nach Fig. 13, der mit einem erfindungsgemäßen Magnetdämpfer ausgerüstet ist, welcher als weitere Variante der Zentriervorrichtung eine Rollenvorrichtung (14) umfasst. Für die Zentrierung des Magnetdämpfers um das Rohr (3) kommt hier im Speziellen eine Rollenführung zum Einsatz. Dadurch lassen sich höhere Laufgeschwindigkeiten und Verschiebewege realisieren. Die Rollenführung besteht aus einer oder mehreren Führungsrollen, welche um das Rohr verteil sind. Jede Führungsrolle lässt sich einzeln mit der einstellbaren Rollenhalterung einstellen, um eine optimale Zentrierung und Vorspannung zu erreichen. Die beschriebene Rollenvorrichtung lässt sich auch noch mit außerhalb des Dämpfers positionierten Führungs- bzw. Gleitbuchsen kombinieren.

In der Praxis hat sich eine Führungs- und Abstandsvorrichtung aus drei Führungsrollen mit entsprechenden Halterungen, die gleichmäßig in einem Winkel von 120° um das Dämpfungsrohr außen verteilt sind, als besonders vorteilhaft erwiesen. Optional kann ein Ausfall oder eine starke Abnutzung einer Führungsrolle, mithilfe einer zusätzlichen Gleitbuchse abgefangen werden, bevor es zu einer Kollision zwischen Rohr (3) und Magnetringen (1) kommt. Zwischen der Gleitbuchse und dem Rohr (3) ist ein Luftspalt vorgesehen, so dass es erst ,wenn eine Führungsrolle ausfällt, zu einem Kontakt zwischen Rohr und Gleitbuchse kommt. Während des nächsten Wartungsintervalls kann die Führungsrolle entweder mit der einstellbaren Rollenhalterung nachgestellt oder ausgetauscht werden und die Gleitbuchse ist wieder entlastet. Für die Zentrierung der Magnetringe zum Rohr sind nur die Führungsrollen der Vorrichtung nötig.

Für die Optimierung der erfindungsgemäßen Magnetdämpfer in Bezug auf die Dämpfungswirkung ist es vorteilhaft, die entstehenden Magnetfelder qualitativ und quantitativ zu erfassen. Die Rotationsymmetrie erlaubt es auf 3D-Simulationen der Magnetfelder und Wirbelströme zu verzichten. Es muss nur eine 2D-achsensymmetrische Simulation durchgeführt werden um den Magnetdämpfer komplett zu berechnen, das vereinfacht und verkürzt die Berechnungen. Entsprechende Programme zur Simulation und Berechnung solcher Felder sind im Stand der Technik bekannt. Mit dem frei erhältlichen Programm FEMM 4.2 können die Magnetfelder der einzelnen Varianten berechnet werden (Fig.1(B), Fig. 3(B),3(C), Fig. 6(B), Fig. 7(B), Fig. 8(B)) Dabei handelt es sich um magneto-statische Simulationen um den Verlauf und die Stärke der Magnetfelder zu visualisieren. In diesem Programm kann keine Bewegung der Magnetringe (1) relativ zum Rohr (3) berechnet werden.

Mit dem Programm ANSYS Maxwell 15.0 wurden die Wirbelströme und Dämpferkräfte berechnet. Sobald es zu einer Relativbewegung zwischen dem Rohr (3) und den Magnetringen kommt werden in das Rohr umlaufende elektrische Ströme induziert. Diese Wirbelströme bilden Magnetfelder welche gegen die Magnetringe (1) wirken. Die Kraft auf das Rohr (3) kann vom Programm ausgegeben werden und mit der Relativgeschwindigkeit kann die Dämpfungskonstante berechnet werden.

## Patentansprüche

1. Schwingungstilger zur Dämpfung von Schwingungen, die in Maschinen, Anlagen und Bauwerken auftreten, umfassend mindestens ein Pendelseil oder eine Pendelstange mit einer Pendelmasse und mindestens einen Magnetdämpfer, **dadurch gekennzeichnet, dass** der Magnetdämpfer rotationssymmetrisch ist und folgende Bauteile umfasst
(i) ein Dämpferrohr (3) aus einem nicht magnetisierbaren leitfähigem Material,
(ii) eine um die Längsachse des Dämpfers rotationssymmetrische mit Befestigungsmitteln versehene Trägervorrichtung (10), welche mindestens eine in Bezug auf das Dämpferrohr (3) äußere magnetische Ringanordnung aus einem oder mehreren Permanentmagneten (1) oder aus einem oder mehreren Elektromagneten in Form von Spulen (6) aufweist, die so angeordnet sind, dass Nord- und Südpol der besagten Magnete entweder radial nach innen oder radial nach außen in Bezug auf die Längsachse oder des Rohrs (3) des Magnetdämpfers weisen, wobei der mindestens eine magnetische äußere Ring (1)(6) über das Dämpferrohr (3) geschoben ist, und Ring und Rohr relativ zueinander berührungslos und reibungsfrei bewegbar sind, und der Abstand zwischen dem mindestens einen magnetischen Ring (1) (6) und der Außenfläche des Dämpferrohrs (3) ≥ 0.1 mm und ≤ 2.0 mm beträgt, und
(iii) mindestens einen aus einem ferromagnetischen Material bestehenden Ring (2) oder aus ihm zusammengesetzten Segmenten, welcher den mindestens einem magnetischen äußeren Ring (1) (6) unmittelbar umschließt.

2. Schwingungstilger nach Anspruch 1, **dadurch gekennzeichnet, dass** der Magnetdämpfer zwei bis zehn magnetische äußere Ringe (1)(6) aufweist, die übereinandergestapelt sind, wobei die radial gerichtete Polung dieser Magnetringe (1)(6) sich von radial magnetisierter Ringebene zu radial magnetisierter Ringebene abwechselt.

3. Schwingungstilger Anspruch 1 oder 2, **dadurch gekennzeichnet, dass** der Magnetdämpfer zusätzlich zu dem Dämpferrohr (3) ein aus einem ferromagnetischen Material bestehendes Rohr oder einen entsprechenden Rundstab (15) aufweist, welches bzw. welcher an der Innenwand des Dämpferrohrs (3) anliegt und mit diesem so verbunden ist, dass eine gemeinsame Bewegung mit dem Dämpferrohr (3) möglich ist.

4. Schwingungstilger zur Dämpfung von Schwingungen, die in Maschinen, Anlagen und Bauwerken auftreten, umfassend mindestens ein Pendelseil oder eine Pendelstange mit einer Pendelmasse und mindestens einen Magnetdämpfer, **dadurch gekennzeichnet, dass** der Magnetdämpfer rotationssymmetrisch ist und folgende Bauteile umfasst
(i) ein Dämpferrohr (3) aus einem nicht magnetisierbaren leitfähigem Material,
(ii) eine um die Längsachse des Dämpfers rotationssymmetrische mit Befestigungsmitteln versehene Trägervorrichtung (10), welche mindestens eine in Bezug auf das Dämpferrohr (3) innere magnetische Ringanordnung aus einem oder mehreren Permanentmagneten (4) oder aus einem oder mehreren Elektromagneten in Form von Spulen (16) aufweist, die so angeordnet sind, dass Nord- und Südpol des oder der Magneten entweder radial nach innen oder radial nach außen in Bezug auf die Längsachse oder des Rohrs (3) des Magnetdämpfers bzw. weisen, wobei der mindestens eine magnetische innere Ring (4)(16) in das Dämpferrohr (3) geschoben ist, und Ring und Rohr relativ zueinander berührungslos und reibungsfrei bewegbar sind, und der Abstand zwischen dem mindestens einen magnetischen Ring (4) und der Innenfläche des Dämpferrohrs (3) ≥ 0.1mm und ≤ 2.0mm beträgt, und
(iii) mindestens einen aus einem ferromagnetischen Material bestehenden massiven zylindrischen Kern (5) oder aus ihm zusammengesetzten Teilen, welcher von dem mindestens einem magnetischen inneren Ring (4) (16) unmittelbar umschlossen wird.

5. Schwingungstilger nach Anspruch 4, **dadurch gekennzeichnet, dass** der Magnetdämpfer zwei bis zehn magnetische innere Ringe (4) (16) aufweist, die übereinander gestapelt sind, wobei die radial gerichtete Polung dieser Magnetringe (4)(16) sich von radial magnetisierter Ringebene zu radial magnetisierter Ringebene abwechselt.

6. Schwingungstilger nach Anspruch 1, **dadurch gekennzeichnet, dass** der Magnetdämpfer zusätzlich zu der mindestens einen magnetischen äußeren Ringanordnung (1)(6) eine innere magnetische Ringanordnung aus einem oder mehreren Permanentmagneten (4) oder aus einem oder mehreren Elektromagneten in Form von Spulen (16) aufweist, die so angeordnet sind, dass Nord- und Südpol des oder der Magneten entweder radial nach innen oder radial nach außen in Bezug auf die Längsachse oder des Rohrs (3) des Magnetdämpfers weisen, wobei Anordnung und Polung eines magnetischen inneren Rings (4) (16) so gewählt ist, dass er auf gleicher Ebene gegenüber einen magnetischen äußeren Ring (1)(4) platziert ist und sich die gegenüberliegenden Pole des inneren und äußeren Rings durch die Wand des Dämpferrohrs (3) hindurch anziehen, und das Dämpferrohr (3) relativ zu besagten magnetischen Ringanordnungen berührungsfrei und reibungslos bewegbar ist, und der Abstand zwischen dem mindestens einen magnetischen inneren Ring (4)(16) und der Innenfläche des Dämpferrohrs (3) ≥ 0.1 mm und ≤ 2.0 mm beträgt.

7. Schwingungstilger nach Anspruch 6, **dadurch gekennzeichnet, dass** der Magnetdämpfer mindestens einen aus einem ferromagnetischen Material bestehenden massiven zylindrischen Kern (5) oder aus ihm zusammengesetzten Teile, aufweist, welcher von dem mindestens einem magnetischen inneren Ring (4)(16) unmittelbar umschlossen wird.

8. Schwingungstilger nach Anspruch 6 oder 7, **dadurch gekennzeichnet, dass** der Magnetdämpfer zwei bis zehn magnetische äußere Ringe (1)(6) aufweist und entsprechend viele auf der jeweils gleichen Ebene gegenüber angeordnete magnetische innere Ringe (4)(16), die jeweils axial übereinander gestapelt sind, wobei die radial gerichtete Polung dieser Magnetringe (1)(6) und (4)(16) sich von radial magnetisierter Ringebene zu radial magnetisierter Ringebene abwechselt.

9. Schwingungstilger nach einem der Ansprüche 1 - 8, **dadurch gekennzeichnet, dass** mindestens ein Magnetring des Magnetdämpfers ein Permanentmagnet (1) (4), und / oder mindestens ein Magnetring eine als Elektromagnet fungierende Spule (6)(16) ist.

10. Schwingungstilger nach einem der Ansprüche 1 - 9, **dadurch gekennzeichnet, dass** er ausschließlich einen oder mehrere äußere (1) oder innere (4) Permanentmagnete (1)(4) aufweist.

11. Schwingungstilger nach Anspruch 10, **dadurch gekennzeichnet, dass** der Magnetdämpfer (a) mindestens eine magnetische äußere Ringanordnung aus einem oder mehreren radial magnetisierten Permanentmagneten (1) aufweist und zusätzlich mindestens eine äußere (11) magnetische Ringanordnung aus einem oder mehreren Permanentmagneten aufweist, die außen am Dämpferrohr (3) berührungsfrei angeordnet ist, oder (b) mindestens eine magnetische innere Ringanordnung (4) aus einem oder mehreren radial magnetisierten Permanentmagneten aufweist und zusätzlich mindestens eine innere (12) magnetische Ringanordnung aus einem oder mehreren Permanentmagneten aufweist, die außen am Dämpferrohr (3) berührungsfrei angeordnet ist,
wobei jeweils die Nord-Süd-Magnetisierungsrichtung der Magnete (11)(12) axial nach oben oder unten in Bezug auf die Längsachse des Magnetdämpfers weist.

12. Schwingungstilger nach Anspruch 11, **dadurch gekennzeichnet, dass** er eine Anordnung von zwei oder mehreren aneinandergrenzende magnetischen äußeren (1) und / oder inneren (4) Ringebenen aus ausschließlich Permanentmagneten aufweist, wobei sich stets eine Ringebene, bezogen auf das Dämpferrohr (3), aus radial magnetisierten Magneten besteht, und die angrenzende andere Ringebene aus äußeren und / oder inneren axial magnetisierten Magneten (11)(12) besteht, so dass stets eine Ringebene (1) an eine Ringebene (11), und eine Ringebene (4) an eine Ringebene (12) grenzt, und bei Vorliegen von drei oder mehr Ringebenen, zwei gleichartige radial magnetisierte Ringebenen durch eine axial magnetisierte Ringebene und zwei gleichartige axial magnetisierte Ringebenen durch eine radial magnetisierte Ringebene voneinander getrennt sind, und die Nord-Süd-Magnetisierungsrichtung einer Ringebene entgegengesetzt ist zur Nord-Süd-Magnetisierungsrichtung der nächsten gleichartigen Ringebene.

13. Schwingungstilger nach einem der Ansprüche 1 - 12, **dadurch gekennzeichnet, dass** er Zentrier- und / oder Abstandvorrichtung (13)(14) aufweist, welche vor und / oder hinter dem funktionellen Bereich des Magnetdämpfers angebracht ist und eine reibungsfreie relative Bewegung des Dämpfungsrohrs (3) gegenüber den Magnetringen gewährleistet.

14. Schwingungstilger nach Anspruch 13, **dadurch gekennzeichnet, dass** die Vorrichtung (13)(14) mindestens eine Rollvorrichtung und / oder Gleitvorrichtung umfasst.

15. Schwingungstilger nach einem der Ansprüche 1 - 14, **dadurch gekennzeichnet, dass** er mindesten zwei besagte rotationssymmetrische Magnetdämpfer aufweist, welche so angeordnet sind, dass sie die horizontale Schwingungsebene abdecken.

16. Schwingungstilger nach einem der Ansprüche 1 - 15, **dadurch gekennzeichnet, dass** (a) der Magnetdämpfer oder die Trägervorrichtung (10) des Magnetdämpfers an der Pendelmasse oder der Pendelstange, und das Dämpfungsrohr (3) direkt an der zu dämpfenden Maschine oder Anlage befestigt ist, oder (b) das Dämpfungsrohr (3) an der Pendelmasse oder Pendelstange und die Trägervorrichtung (10) des Magnetdämpfers, direkt an der zu dämpfenden Maschine oder Anlage befestigt ist.

17. Verwendung eines Schwingungstilgers gemäß einem der Ansprüche 1 - 16 zur Dämpfung von Schwingungen in Maschinen und Anlagen, insbesondere Windkraftanlagen, mit einer Dämpfungsdichte von > 1.500 kNs/m x m³.

18. Windkraftanlage enthaltend mindestens einen Schwingungstilger gemäß der Ansprüche 1 - 16.

## Claims

1. Vibration absorber for damping vibrations which occur in machines, installations and buildings, comprising at least one pendulum cable or pendulum rod with a pendulum weight and at least one magnetic damper, **characterised in that** the magnetic damper is rotationally symmetrical and comprises the following components:
(i) a damper tube (3) made from a non-magnetisable conductive material,
(ii) a support device (10), which is rotationally symmetrical around the longitudinal axis of the damper, is provided with attachment means and has at least one outer, in relation to the damper tube (3), magnetic ring arrangement comprising one or more permanent magnets (1) or comprising one or more electromagnets in the form of coils (6), which are arranged in such a way that north and south poles of the said magnets point either radially inwards or radially outwards in relation to the longitudinal axis of the tube (3) of the magnetic damper, where the at least one magnetic outer ring (1)(6) has been pushed over the damper tube (3), and ring and tube are movable relative to one another in a non-contact and friction-free manner, and the separation between the at least one magnetic ring (1) (6) and the outside surface of the damper tube (3) is ≥ 0.1 mm and ≤ 2.0 mm, and
(iii) at least one ring (2) consisting of a ferromagnetic material or segments composed thereof, which immediately surrounds the at least one magnetic outer ring (1) (6).

2. Vibration absorber according to Claim 1, **characterised in that** the magnetic damper has two to ten magnetic outer rings (1)(6) which are stacked one above the other, where the radially directed polarity of these magnet rings (1)(6) alternates from radially magnetised ring plane to radially magnetised ring plane.

3. Vibration absorber according to Claim 1 or 2, **characterised in that**, in addition to the damper tube (3), the magnetic damper has a tube consisting of a ferromagnetic material or a corresponding round bar (15), which is in contact with the inside wall of the damper tube (3) and is connected thereto in such a way that common movement with the damper tube (3) is possible.

4. Vibration absorber for damping vibrations which occur in machines, installations and buildings, comprising at least one pendulum cable or pendulum rod with a pendulum weight and at least one magnetic damper, **characterised in that** the magnetic damper is rotationally symmetrical and comprises the following components:
(i) a damper tube (3) made from a non-magnetisable conductive material,
(ii) a support device (10), which is rotationally symmetrical around the longitudinal axis of the damper, is provided with attachment means and has at least one inner, in relation to the damper tube (3), magnetic ring arrangement comprising one or more permanent magnets (4) or comprising one or more electromagnets in the form of coils (16), which are arranged in such a way that north and south poles of the magnet(s) point either radially inwards or radially outwards in relation to the longitudinal axis of the tube (3) of the magnetic damper, where the at least one magnetic inner ring (4) (16) has been pushed into the damper tube (3), and ring and tube are movable relative to one another in a non-contact and friction-free manner, and the separation between the at least one magnetic ring (4) and the inside surface of the damper tube (3) is ≥ 0.1 mm and ≤ 2.0 mm, and
(iii) at least one solid cylindrical core (5) consisting of a ferromagnetic material or parts composed thereof, which is immediately surrounded by the at least one magnetic inner ring (4) (16).

5. Vibration absorber according to Claim 4, **characterised in that** the magnetic damper has two to ten magnetic inner rings (4) (16) which are stacked one above the other, where the radially directed polarity of these magnet rings (4)(16) alternates from radially magnetised ring plane to radially magnetised ring plane.

6. Vibration absorber according to Claim 1, **characterised in that**, in addition to the at least one magnetic outer ring arrangement (1)(6), the magnetic damper has an inner magnetic ring arrangement comprising one or more permanent magnets (4) or comprising one or more electromagnets in the form of coils (16), which are arranged in such a way that north and south poles of the magnet(s) point either radially inwards or radially outwards in relation to the longitudinal axis or of the tube (3) of the magnetic damper, where the arrangement and polarity of a magnetic inner ring (4) (16) is selected in such a way that it is positioned on the same plane opposite a magnetic outer ring (1)(4) and the opposite poles of the inner and outer rings attract one another through the wall of the damper tube (3), and the damper tube (3) is movable relative to said magnetic ring arrangements in a non-contact and friction-free manner, and the separation between the at least one magnetic inner ring (4)(16) and the inside surface of the damper tube (3) is ≥ 0.1 mm and ≤ 2.0 mm.

7. Vibration absorber according to Claim 6, **characterised in that** the magnetic damper has at least one solid cylindrical core (5) consisting of a ferromagnetic material or parts composed thereof, which is immediately surrounded by the at least one magnetic inner ring (4)(16).

8. Vibration absorber according to Claim 6 or 7, **characterised in that** the magnetic damper has two to ten magnetic outer rings (1)(6) and a corresponding number of magnetic inner rings (4)(16) arranged opposite on the same plane in each case, which are in each case stacked axially one above the other, where the radially directed polarity of these magnet rings (1)(6) and (4)(16) alternates from radially magnetised ring plane to radially magnetised ring plane.

9. Vibration absorber according to one of Claims 1 - 8, **characterised in that** at least one magnet ring of the magnetic damper is a permanent magnet (1) (4), and/or at least one magnetic ring is a coil (6)(16) functioning as electromagnet.

10. Vibration absorber according to one of Claims 1 - 9, **characterised in that** it has exclusively one or more outer (1) or inner (4) permanent magnets (1)(4).

11. Vibration absorber according to Claim 10, **characterised in that** the magnetic damper (a) has at least one magnetic outer ring arrangement comprising one or more radially magnetised permanent magnets (1) and additionally has at least one outer (11) magnetic ring arrangement comprising one or more permanent magnets which is arranged on the outside of the damper tube (3) in a non-contact manner, or (b) has at least one magnetic inner ring arrangement (4) comprising one or more radially magnetised permanent magnets and additionally has at least one inner (12) magnetic ring arrangement comprising one or more permanent magnets which is arranged on the outside of the damper tube (3) in a non-contact manner,
where the north/south magnetisation direction of the magnets (11)(12) in each case points axially upwards or downwards in relation to the longitudinal axis of the magnetic damper.

12. Vibration absorber according to Claim 11, **characterised in that** it has an arrangement of two or more adjacent magnetic outer (1) and/or inner (4) ring planes comprising exclusively permanent magnets, where one ring plane, relative to the damper tube (3), always consists of radially magnetised magnets, and the adjacent other ring plane consists of outer and/or inner axially magnetised magnets (11)(12), so that a ring plane (1) is always adjacent to a ring plane (11) and a ring plane (4) is always adjacent to a ring plane (12), and, in the case of the presence of three or more ring planes, two radially magnetised ring planes of the same type are separated from one another by an axially magnetised ring plane and two axially magnetised ring planes of the same type are separated from one another by a radially magnetised ring plane, and the north/south magnetisation direction of one ring plane is opposite to the north/south magnetisation direction of the next ring plane the same type.

13. Vibration absorber according to one of Claims 1 - 12, **characterised in that** it has a centring and/or spacer device (13)(14), which is mounted in front of and/or behind the functional region of the magnetic damper and ensures friction-free relative movement of the damping tube (3) relative to the magnet rings.

14. Vibration absorber according to Claim 13, **characterised in that** the device (13)(14) comprises at least one roller device and/or sliding device.

15. Vibration absorber according to one of Claims 1 -14, **characterised in that** it has at least two said rotationally symmetrical magnetic dampers, which are arranged in such a way that they cover the horizontal vibration plane.

16. Vibration absorber according to one of Claims 1 - 15, **characterised in that** (a) the magnetic damper or the support device (10) the magnetic damper is attached to the pendulum weight or pendulum rod, and the damping tube (3) is attached directly to the machine or installation to be damped, or (b) the damping tube (3) is attached to the pendulum weight or pendulum rod and the support device (10) of the magnetic damper is attached directly to the machine or installation to be damped.

17. Use of a vibration absorber according to one of Claims 1 - 16 for damping vibrations in machines and installations, in particular wind turbines, having a damping density of > 1500 kNs/m x m³.

18. Wind turbine containing a vibration absorber according to Claims 1 - 16.

## Revendications

1. Absorbeur de vibrations pour amortir les vibrations qui surviennent dans les machines, les installations et les bâtiments, comprenant au moins un câble de pendule ou une tige de pendule avec un poids de pendule et au moins un amortisseur magnétique, **caractérisé en ce que** l'amortisseur magnétique est symétrique en rotation et comprend les composants qui suivent :
(i) un tube d'amortisseur (3) qui est réalisé à partir d'un matériau conducteur non magnétisable ;
(ii) un dispositif de support (10), qui est symétrique en rotation autour de l'axe longitudinal de l'amortisseur, qui est muni d'un moyen de fixation et qui comporte au moins un agencement de bague magnétique externe, en relation avec le tube d'amortisseur (3), qui comprend un ou plusieurs aimant(s) permanent(s) (1) ou qui comprend un ou plusieurs électroaimant(s) sous la forme de bobines (6), lesquels aimants ou électroaimants sont agencés de telle sorte que les pôles nord et sud desdits aimants pointent soit radialement vers l'intérieur, soit radialement vers l'extérieur, en relation avec l'axe longitudinal du tube (3) de l'amortisseur magnétique, dans lequel l'au moins une bague magnétique externe (1) (6) a été poussée au-dessus du tube d'amortisseur (3), et la bague et le tube sont mobiles l'un par rapport à l'autre d'une manière sans contact et sans friction, et la séparation entre l'au moins une bague magnétique (1) (6) et la surface extérieure du tube d'amortisseur (3) est ≥ 0,1 mm et ≤ 2,0 mm ; et
(iii) au moins une bague (2) qui est constituée en un matériau ferromagnétique ou par des segments qui sont constitués en ce même matériau, laquelle bague entoure immédiatement l'au moins une bague magnétique externe (1) (6).

2. Absorbeur de vibrations selon la revendication 1, **caractérisé en ce que** l'amortisseur magnétique comporte de deux à dix bagues magnétiques externes (1)(6) qui sont empilées les unes au-dessus des autres, dans lequel les polarités dirigées radialement de ces bagues magnétiques (1)(6) sont alternées depuis un plan de bague magnétisé radialement jusqu'à un plan de bague magnétisé radialement.

3. Absorbeur de vibrations selon la revendication 1 ou 2, **caractérisé en ce que**, en plus du tube d'amortisseur (3), l'amortisseur magnétique comporte un tube qui est constitué en un matériau ferromagnétique ou une barre ronde correspondante (15), lequel tube ou laquelle barre est en contact avec la paroi intérieure du tube d'amortisseur (3) et lui est connecté(e) de telle sorte qu'un mouvement commun avec le tube d'amortisseur (3) soit possible.

4. Absorbeur de vibrations pour amortir les vibrations qui surviennent dans les machines, les installations et les bâtiments, comprenant au moins un câble de pendule ou une tige de pendule avec un poids de pendule et au moins un amortisseur magnétique, **caractérisé en ce que** l'amortisseur magnétique est symétrique en rotation et comprend les composants qui suivent :
(i) un tube d'amortisseur (3) qui est réalisé à partir d'un matériau conducteur non magnétisable ;
(ii) un dispositif de support (10), qui est symétrique en rotation autour de l'axe longitudinal de l'amortisseur, qui est muni d'un moyen de fixation et qui comporte au moins un agencement de bague magnétique interne, en relation avec le tube d'amortisseur (3), qui comprend un ou plusieurs aimant(s) permanent(s) (4) ou qui comprend un ou plusieurs électroaimant(s) sous la forme de bobines (16), lesquels aimants ou électroaimants sont agencés de telle sorte que les pôles nord et sud de l'aimant/des aimants pointent soit radialement vers l'intérieur, soit radialement vers l'extérieur, en relation avec l'axe longitudinal du tube (3) de l'amortisseur magnétique, dans lequel l'au moins une bague magnétique interne (4) (16) a été poussée à l'intérieur du tube d'amortisseur (3), et la bague et le tube sont mobiles l'un par rapport à l'autre d'une manière sans contact et sans friction, et la séparation entre l'au moins une bague magnétique (4) et la surface intérieure du tube d'amortisseur (3) est ≥ 0,1 mm et ≤ 2,0 mm ; et
(iii) au moins un noyau cylindrique solide (5) qui est constitué en un matériau ferromagnétique ou par des parties constituées en ce même matériau, lequel est immédiatement entouré par l'au moins une bague magnétique interne (4) (16).

5. Absorbeur de vibrations selon la revendication 4, **caractérisé en ce que** l'amortisseur magnétique comporte de deux à dix bagues magnétiques internes (4) (16) qui sont empilées les unes au-dessus des autres, dans lequel les polarités dirigées radialement de ces bagues magnétiques (4) (16) sont alternées depuis un plan de bague magnétisé radialement jusqu'à un plan de bague magnétisé radialement.

6. Absorbeur de vibrations selon la revendication 1, **caractérisé en ce que**, en plus de l'au moins un agencement de bague magnétique externe (1) (6), l'amortisseur magnétique comporte un agencement de bague magnétique interne qui comprend un ou plusieurs aimant(s) permanent(s) (4) ou qui comprend un ou plusieurs électroaimant(s) sous la forme de bobines (16), lesquels aimants ou électroaimants sont agencés de telle sorte que les pôles nord et sud de l'aimant/des aimants pointent soit radialement vers l'intérieur, soit radialement vers l'extérieur, en relation avec l'axe longitudinal du tube (3) de l'amortisseur magnétique, dans lequel l'agencement et la polarité d'une bague magnétique interne (4) (16) sont sélectionnés de telle sorte qu'elle soit positionnée sur le même plan à l'opposé d'une bague magnétique externe (1) (4) et de telle sorte que les pôles opposés des bagues interne et externe s'attirent les uns les autres au travers de la paroi du tube d'amortisseur (3), et le tube d'amortisseur (3) est mobile par rapport auxdits agencements de bague magnétique d'une manière sans contact et sans friction, et la séparation entre l'au moins une bague magnétique interne (4) (16) et la surface intérieure du tube d'amortisseur (3) est ≥ 0,1 mm et ≤ 2,0 mm.

7. Absorbeur de vibrations selon la revendication 6, **caractérisé en ce que** l'amortisseur magnétique comporte au moins un noyau cylindrique solide (5) qui est constitué en un matériau ferromagnétique ou par des parties constituées en ce même matériau, lequel est immédiatement entouré par l'au moins une bague magnétique interne (4) (16).

8. Absorbeur de vibrations selon la revendication 6 ou 7, **caractérisé en ce que** l'amortisseur magnétique comporte de deux à dix bagues magnétiques externes (1) (6) et un nombre correspondant de bagues magnétiques internes (4) (16) qui sont agencées à l'opposé sur le même plan dans chaque cas, qui sont dans chaque cas empilées axialement les unes au-dessus des autres, dans lequel les polarités dirigées radialement de ces bagues magnétiques (1) (6) et (4) (16) sont alternées depuis un plan de bague magnétisé radialement jusqu'à un plan de bague magnétisé radialement.

9. Absorbeur de vibrations selon l'une des revendications 1 - 8, **caractérisé en ce qu'**au moins une bague magnétique de l'amortisseur magnétique est un aimant permanent (1) (4), et/ou au moins une bague magnétique est une bobine (6) (16) qui joue le rôle d'un électroaimant.

10. Absorbeur de vibrations selon l'une des revendications 1 - 9, **caractérisé en ce qu'**il comporte de façon exclusive un ou plusieurs aimant(s) permanent(s) (1) (4) externe(s) (1) ou interne(s) (4).

11. Absorbeur de vibrations selon la revendication 10, **caractérisé en ce que** l'amortisseur magnétique (a) comporte au moins un agencement de bague magnétique externe qui comprend un ou plusieurs aimant(s) permanent(s) magnétisé(s) radialement (1) et de façon additionnelle, comporte au moins un agencement de bague magnétique externe (11) qui comprend un ou plusieurs aimant(s) permanent(s), lequel agencement est agencé sur l'extérieur du tube d'amortisseur (3) d'une manière sans contact, ou (b) comporte au moins un agencement de bague magnétique interne (4) qui comprend un ou plusieurs aimant(s) permanent(s) magnétisé(s) radialement et de façon additionnelle, comporte au moins un agencement de bague magnétique interne (12) qui comprend un ou plusieurs aimant(s) permanent(s), lequel agencement est agencé sur l'extérieur du tube d'amortisseur (3) d'une manière sans contact ;
dans lequel la direction de magnétisation nord/sud des aimants (11) (12) pointe dans chaque cas axialement vers le haut ou vers le bas en relation avec l'axe longitudinal de l'amortisseur magnétique.

12. Absorbeur de vibrations selon la revendication 11, **caractérisé en ce qu'**il comporte un agencement de deux plans de bague magnétique externe (1) et/ou interne (4) adjacents ou plus qui comprennent de façon exclusive des aimants permanents, dans lequel un plan de bague, en relation avec le tube d'amortisseur (3), est toujours constitué par des aimants magnétisés radialement, et l'autre plan de bague adjacent est constitué par des aimants magnétisés axialement externe(s) et/ou interne(s) (11) (12), de telle sorte qu'un plan de bague (1) soit toujours adjacent à un plan de bague (11) et qu'un plan de bague (4) soit toujours adjacent à un plan de bague (12), et de telle sorte que, dans le cas de la présence de trois plans de bague ou plus, deux plans de bague magnétisés radialement du même type soient séparés l'un de l'autre par un plan de bague magnétisé axialement et de telle sorte que deux plans de bague magnétisés axialement du même type soient séparés l'un de l'autre par un plan de bague magnétisé radialement, et la direction de magnétisation nord/sud d'un plan de bague est opposée à la direction de magnétisation nord/sud du plan de bague suivant du même type.

13. Absorbeur de vibrations selon l'une des revendications 1 - 12, **caractérisé en ce qu'**il comporte un dispositif de centrage et/ou d'espaceur (13) (14), lequel est monté à l'avant de et/ou derrière la région fonctionnelle de l'amortisseur magnétique et assure un mouvement relatif sans friction du tube d'amortissement (3) par rapport aux bagues magnétiques.

14. Absorbeur de vibrations selon la revendication 13, **caractérisé en ce que** le dispositif (13) (14) comprend au moins un dispositif de roulement et/ou un dispositif de coulissement.

15. Absorbeur de vibrations selon l'une des revendications 1 - 14, **caractérisé en ce qu'**il comporte au moins deux dits amortisseurs magnétiques symétriques en rotation, lesquels sont agencés de telle sorte qu'ils recouvrent le plan de vibration horizontal.

16. Absorbeur de vibrations selon l'une des revendications 1 - 15, **caractérisé en ce que** (a) l'amortisseur magnétique ou le dispositif de support (10) de l'amortisseur magnétique est fixé au poids de pendule ou à la tige de pendule, et le tube d'amortissement (3) est fixé directement à la machine ou à l'installation qui doit être amortie, ou (b) le tube d'amortissement (3) est fixé au poids de pendule ou à la tige de pendule et le dispositif de support (10) de l'amortisseur magnétique est fixé directement à la machine ou à l'installation qui doit être amortie.

17. Utilisation d'un absorbeur de vibrations selon l'une des revendications 1 - 16 pour amortir les vibrations dans les machines et les installations, en particulier des éoliennes, qui présentent une densité d'amortissement > 1500 kNs/m x m³.

18. Éolienne contenant un absorbeur de vibrations selon les revendications 1 - 16.
